# EUROPEAN PATENT APPLICATION

(11) **EP 3 562 240 A1**
(43) Date of publication of application: **30.10.2019**
(21) Application number: 18745195.0
(22) Date of filing: 16.01.2018
(51) Int. Cl.: H04W 72/04

(54) **COMMUNICATION METHOD AND APPARATUS**

(30) Priority: 25.01.2017 CN 201710060762
(71) Applicant: Huawei Technologies Co., Ltd., Longgang District Shenzhen, Guangdong 518129 (CN)
(72) Inventor: LI, Chao, Shenzhen Guangdong 518129 (CN); FENG, Shulan, Shenzhen Guangdong 518129 (CN); ZHANG, Xingwei, Shenzhen Guangdong 518129 (CN)
(74) Representative: Gill Jennings & Every LLP
(86) International application number: PCT/CN2018/072857
(87) International publication number: WO 2018/137514

(57) **Abstract**

This application discloses a communication method and a communications apparatus, to overcome vulnerability of without-grant uplink transmissions to a collision in the prior art. The method includes: receiving, by a first device, an acknowledgement message group sent by a second device, where the acknowledgement message group includes an acknowledgement message of the second device for data sent by the first device; obtaining a first parameter, where the first parameter is used to determine the acknowledgement message for the data sent by the first device; and determining, from the acknowledgement message group based on the first parameter, the acknowledgement message for the data sent by the first device. In this way, whether data sent by a group of first devices is successfully received is confirmed using the acknowledgement message group, so that a collision probability in uplink transmission can be reduced, a delay in the entire transmission can be decreased, and feedback overheads of an acknowledgement message can be reduced.

## Description

This application claims priority to Chinese Patent Application No. 201710060762.4, filed with Chinese Patent Office on January 25, 2017 and entitled "COMMUNICATION METHOD AND COMMUNICATIONS APPARATUS", which is incorporated herein by reference in its entirety.

### TECHNICAL FIELD

This application relates to the field of communications technologies, and in particular, to a communication method and a communications apparatus.

### BACKGROUND

In a wireless signal transmission process, sufficient reliability of data during transmission and controllability and manageability of a terminal device and a base station during signal sending and receiving need to be ensured. Therefore, in a Long Term Evolution (Long Term Evolution, LTE) system, scheduling signaling needs to be used to schedule uplink transmission of the terminal device, and a corresponding acknowledgement message is further used to confirm whether a sent message is successfully received.

Although the communication manner in the prior art improves communication reliability to some extent, a scheduling delay is increased. Therefore, a without-grant uplink transmission mode currently becomes a concern of research of the 3rd Generation Partnership Project (3rd Generation Partnership Project, 3GPP). Such a transmission mode allows a terminal device to directly send data without uplink scheduling, thereby reducing a transmission delay. However, while the transmission delay is reduced, potential collisions in uplink transmission of terminal the device are increased. Further, the base station needs to feed back acknowledgement messages for different without-grant uplink transmissions. However, because there is no scheduling information in uplink transmission, how the base station feeds back the acknowledgement messages for these without-grant transmissions without increasing an additional transmission delay and feedback overheads is an urgent problem to be resolved.

### SUMMARY

This application provides a communication method and a communications apparatus, to overcome vulnerability of without-grant uplink transmissions to a collision in the prior art.

According to a first aspect, this application provides a communication method, including: receiving, by a first device, an acknowledgement message group sent by a second device, where the acknowledgement message group includes an acknowledgement message of the second device for data sent by the first device; obtaining a first parameter, where the first parameter is used to determine the acknowledgement message for the data sent by the first device; and determining, from the acknowledgement message group based on the first parameter, the acknowledgement message for the data sent by the first device.

In the foregoing solution, the acknowledgement message group is used to confirm whether data sent by a group of first devices is successfully received. In this way, a collision probability in uplink transmission of the first devices can be reduced, a delay in the entire transmission can be decreased, and feedback overheads of an acknowledgement message can be reduced.

With reference to the first aspect, in a possible design, the data sent by the first device to the second device is sent by the first device using a without-grant transmission resource.

With reference to the first aspect, in a possible design, the first parameter includes indication information of a location, in the acknowledgement message group, of the acknowledgement message for the data sent by the first device.

In this way, locations of acknowledgement messages for first devices can be clearly indicated in the acknowledgement message group using the first parameter, physical layer signaling overheads are reduced, and the first devices can correspond to respective acknowledgement messages.

With reference to the first aspect, in a possible design, the first parameter is used to determine the acknowledgement message for the data sent by the first device, and the first parameter includes indication information of a transmission resource for the data sent by the first device.

In this way, locations of acknowledgement messages for first devices can be clearly indicated in the acknowledgement message group using the first parameter, physical layer signaling overheads are reduced, and the first devices can correspond to respective acknowledgement messages.

With reference to the first aspect, in a possible design, the transmission resource includes at least one of the following resources: a time domain resource, a frequency domain resource, a code domain resource, and a space domain resource.

With reference to the first aspect, in a possible design, the acknowledgement message group includes an acknowledgement message for data received by the second device from at least one first device.

In this way, an acknowledgement to data of a plurality of first devices is implemented using the acknowledgement message group, thereby reducing signaling overheads.

With reference to the first aspect, in a possible design, the acknowledgement message further includes index information of at least one transmission resource in a reference signal, control information, and data that are sent by the first device.

In this way, a plurality of transmission parameters can be used to jointly indicate non-overlapping locations of acknowledgement messages for the first device, and implementations are diversified.

With reference to the first aspect, in a possible design, each acknowledgement message in the acknowledgement message group is an acknowledgement to the data sent by the at least one first device.

In this way, signaling overheads can further be reduced. Although a delay on the first device side is increased for a latency-insensitive service, no more responses and scheduling are required on a network side. It helps to support a large quantity of users, and transmission efficiency is quite high.

With reference to the first aspect, in a possible design, the acknowledgement message in the acknowledgement message group is generated through an AND logical operation on the acknowledgement message for the at least one first device.

With reference to the first aspect, in a possible design, the acknowledgement message generated through the AND logical operation corresponds to a same first parameter.

With reference to the first aspect, in a possible design, the acknowledgement message of the second device for the data sent by the first device further includes:
indication information indicating whether the first device or the transmission resource for the data sent by the first device has a collision, and/or indication information indicating whether the first device or the transmission resource for the data sent by the first device is idle.

In this way, after receiving the acknowledgement message, the first device makes a corresponding transmission adjustment based on the indication information in the acknowledgement message, to reduce potential collisions.

With reference to the first aspect, in a possible design, the acknowledgement message group is transmitted in common control information.

With reference to the first aspect, in a possible design, when the first device has not detected the acknowledgement message in the common control information, the first device detects the acknowledgement message in control information specific to the first device.

With reference to the first aspect, in a possible design, the acknowledgement message includes at least one of indication information of a transmission mode and the indication information of the transmission resource.

In this way, a transmission parameter of the first device can be precisely indicated, communication efficiency and performance are improved, and particularly, more efficient acknowledgement scheduling can be provided for a first device with a transmission collision.

With reference to the first aspect, in a possible design, a frame structure of the data sent by the first device to the second device includes a reference signal and data, or includes a reference signal, control information, and data.

With reference to the first aspect, in a possible design, the acknowledgement message of the second device for the data sent by the first device includes positive or negative acknowledgement information for detection of the control information or the data sent by the first device.

According to a second aspect, this application provides a communication method, including: receiving, by a second device, data sent by a first device; generating, by the second device, an acknowledgement message group for the data sent by the first device, where the acknowledgement message group includes an acknowledgement message of the second device for the data sent by the at least one first device; and sending, by the second device, the acknowledgement message group to the first device.

In the foregoing solution, the second device uses the acknowledgement message group to confirm whether data sent by a group of first devices is successfully received. In this way, a collision probability in uplink transmission can be reduced, a delay in the entire transmission can be decreased, and feedback overheads of an acknowledgement message can be reduced.

With reference to the second aspect, in a possible design, the data received by the second device is sent by the first device using a without-grant transmission resource.

With reference to the second aspect, in a possible design, before the sending, by the second device, the acknowledgement message group to the first device, the method further includes:
sending, by the second device, a first parameter to the first device, where the first parameter is used to determine an acknowledgement message for the data sent by the first device.

In this design, the first device determines, based on the received first parameter, the acknowledgement message for the data sent by the first device. In this case, the second device can give an acknowledgement to uplink transmission of a group of first devices, thereby reducing signaling overheads.

With reference to the second aspect, in a possible design, the first parameter includes indication information of a location, in the acknowledgement message group, of the acknowledgement message for the data sent by the first device.

In this way, locations of acknowledgement messages for first devices can be clearly indicated in the acknowledgement message group using the first parameter, physical layer signaling overheads are reduced, and the first devices can correspond to respective acknowledgement messages.

With reference to the second aspect, in a possible design, the first parameter is used to determine the acknowledgement message for the data sent by the first device, and the first parameter includes indication information of a transmission resource for the data sent by the first device.

In this way, locations of acknowledgement messages for first devices can be clearly indicated in the acknowledgement message group using the first parameter, physical layer signaling overheads are reduced, and the first devices can correspond to respective acknowledgement messages.

With reference to the second aspect, in a possible design, the transmission resource includes at least one of the following resources: a time domain resource, a frequency domain resource, a code domain resource, and a space domain resource.

With reference to the second aspect, in a possible design, the acknowledgement message group includes the acknowledgement message for the data received by the second device from the at least one first device.

In this way, an acknowledgement to data of a plurality of first devices is implemented using the acknowledgement message group, thereby reducing signaling overheads.

With reference to the second aspect, in a possible design, the acknowledgement message further includes index information of at least one transmission resource in a reference signal, control information, and data that are sent by the first device.

In this way, a plurality of transmission parameters can be used to jointly indicate non-overlapping locations of acknowledgement messages for the first device, and implementations are diversified.

With reference to the second aspect, in a possible design, each acknowledgement message in the acknowledgement message group is an acknowledgement to the data sent by the at least one first device.

In this way, signaling overheads can further be reduced. Although a delay on the first device side is increased for a latency-insensitive service, no more responses and scheduling are required on a network side. It helps to support a large quantity of users, and transmission efficiency is quite high.

With reference to the second aspect, in a possible design, each acknowledgement message in the acknowledgement message group is generated through an AND logical operation on the acknowledgement message for the at least one first device.

With reference to the second aspect, in a possible design, the acknowledgement message generated through the AND logical operation corresponds to a same first parameter.

With reference to the second aspect, in a possible design, the acknowledgement message of the second device for the data sent by the first device further includes:
indication information indicating whether the first device or the transmission resource for the data sent by the first device has a collision, and/or indication information indicating whether the first device or the transmission resource for the data sent by the first device is idle.

In this way, after receiving the acknowledgement message, the first device makes a corresponding transmission adjustment based on the indication information in the acknowledgement message, to reduce potential collisions.

With reference to the second aspect, in a possible design, the acknowledgement message group is transmitted in common control information.

With reference to the second aspect, in a possible design, the acknowledgement message includes at least one of indication information of a transmission mode and the indication information of the transmission resource.

In this way, a transmission parameter of the first device can be precisely indicated, communication efficiency and performance are improved, and particularly, more efficient acknowledgement scheduling can be provided for a first device with a transmission collision.

With reference to the second aspect, in a possible design, a frame structure of the data that is sent by the first device and received by the second device includes a reference signal and data, or includes a reference signal, control information, and data.

With reference to the second aspect, in a possible design, the acknowledgement message of the second device for the data sent by the first device includes positive or negative acknowledgement information for detection of the control information or the data sent by the first device.

According to a third aspect, this application provides a first device, including:
a transceiver unit, configured to receive an acknowledgement message group sent by a second device, where the acknowledgement message group includes an acknowledgement message of the second device for data sent by the transceiver unit; and
a processing unit, configured to: obtain a first parameter, where the first parameter is used to determine the acknowledgement message for the data sent by the transceiver unit; and determine, from the acknowledgement message group based on the first parameter, the acknowledgement message for the data sent by the transceiver unit.

With reference to the third aspect, in a possible design, the data sent by the transceiver unit to the second device is sent by the transceiver unit using a without-grant transmission resource.

With reference to the third aspect, in a possible design, the first parameter includes indication information of a location, in the acknowledgement message group, of the acknowledgement message for the data sent by the transceiver unit.

With reference to the third aspect, in a possible design, the first parameter is used to determine the acknowledgement message for the data sent by the transceiver unit, and the first parameter includes:
indication information of a transmission resource for the data sent by the transceiver unit.

With reference to the third aspect, in a possible design, the transmission resource includes at least one of the following resources: a time domain resource, a frequency domain resource, a code domain resource, and a space domain resource.

With reference to the third aspect, in a possible design, the acknowledgement message group includes an acknowledgement message for data received by the second device from at least one first device.

With reference to the third aspect, in a possible design, the acknowledgement message further includes index information of at least one transmission resource in a reference signal, control information, and data that are sent by the transceiver unit.

With reference to the third aspect, in a possible design, each acknowledgement message in the acknowledgement message group is an acknowledgement to the data sent by the at least one first device.

With reference to the third aspect, in a possible design, the acknowledgement message in the acknowledgement message group is generated through an AND logical operation on the acknowledgement message for the at least one first device.

With reference to the third aspect, in a possible design, the acknowledgement message generated through the AND logical operation corresponds to a same first parameter.

With reference to the third aspect, in a possible design, the acknowledgement message of the second device for the data sent by the transceiver unit further includes:
indication information indicating whether the first device or the transmission resource for the data sent by the transceiver unit has a collision, and/or indication information indicating whether the first device or the transmission resource for the data sent by the transceiver unit is idle.

With reference to the third aspect, in a possible design, the acknowledgement message group is transmitted in common control information.

With reference to the third aspect, in a possible design, when the processing unit has not detected the acknowledgement message in the common control information, the processing unit detects the acknowledgement message in control information specific to the first device.

With reference to the third aspect, in a possible design, the acknowledgement message includes at least one of indication information of a transmission mode and the indication information of the transmission resource.

With reference to the third aspect, in a possible design, a frame structure of the data sent by the transceiver unit to the second device includes a reference signal and data, or includes a reference signal, control information, and, data.

With reference to the third aspect, in a possible design, the acknowledgement message of the second device for the data sent by the transceiver unit includes positive or negative acknowledgement information for detection of the control information or the data sent by the transceiver unit.

According to a fourth aspect, this application provides a second device, including:
a transceiver unit, configured to receive data sent by a first device; and
a processing unit, configured to generate an acknowledgement message group for the data sent by the first device, where the acknowledgement message group includes an acknowledgement message of the second device for the data sent by the at least one first device, where
the transceiver unit is further configured to send the acknowledgement message group to the first device.

With reference to the fourth aspect, in a possible design, the data received by the transceiver unit is sent by the first device using a without-grant transmission resource.

With reference to the fourth aspect, in a possible design, before sending the acknowledgement message group to the first device, the transceiver unit is further configured to:
send a first parameter to the first device, where the first parameter is used to determine an acknowledgement message for the data sent by the first device.

With reference to the fourth aspect, in a possible design, the first parameter includes indication information of a location, in the acknowledgement message group, of the acknowledgement message for the data sent by the first device.

With reference to the fourth aspect, in a possible design, the first parameter is used to determine the acknowledgement message for the data sent by the first device, and the first parameter includes indication information of a transmission resource for the data sent by the first device.

With reference to the fourth aspect, in a possible design, the transmission resource includes at least one of the following resources: a time domain resource, a frequency domain resource, a code domain resource, and a space domain resource.

With reference to the fourth aspect, in a possible design, the acknowledgement message group includes the acknowledgement message for the data received by the transceiver unit from the at least one first device.

With reference to the fourth aspect, in a possible design, the acknowledgement message further includes index information of at least one transmission resource in a reference signal, control information, and data that are sent by the first device.

With reference to the fourth aspect, in a possible design, each acknowledgement message in the acknowledgement message group is an acknowledgement to the data sent by the at least one first device.

With reference to the fourth aspect, in a possible design, each acknowledgement message in the acknowledgement message group is generated through an AND logical operation on the acknowledgement message for the at least one first device.

With reference to the fourth aspect, in a possible design, the acknowledgement message generated through the AND logical operation corresponds to a same first parameter.

With reference to the fourth aspect, in a possible design, the acknowledgement message of the transceiver unit for the data sent by the first device further includes:
indication information indicating whether the first device or the transmission resource for the data sent by the first device has a collision, and/or indication information indicating whether the first device or the transmission resource for the data sent by the first device is idle.

With reference to the fourth aspect, in a possible design, the acknowledgement message group is transmitted in common control information.

With reference to the fourth aspect, in a possible design, the acknowledgement message includes at least one of indication information of a transmission mode and the indication information of the transmission resource.

With reference to the fourth aspect, in a possible design, a frame structure of the data that is sent by the first device and received by the transceiver unit includes a reference signal and data, or includes a reference signal, control information, and data.

With reference to the fourth aspect, in a possible design, the acknowledgement message of the transceiver unit for the data sent by the first device includes positive or negative acknowledgement information for detection of the control information or the data sent by the first device.

According to a fifth aspect, this application provides a communication method, copmrising: obtaining, by a first device, first control information, where the first control information comprises at least one of indication information of a transmission mode and indication information of a transmission resource; determining a transmission resource for first data based on the first control information; and sending the first data on the determined transmission resource.

In the foregoing solution, a transmission parameter of the first device can be precisely indicated using the first control information, communication efficiency and performance are improved, and particularly, more efficient acknowledgement scheduling can be provided for a first device with a transmission collision.

With reference to the fifth aspect, in a possible design, the transmission mode comprises a grant-based transmission mode or a without-grant transmission mode.

With reference to the fifth aspect, in a possible design, the transmission mode comprises a contention-based without-grant transmission mode or a preconfiguration-based without-grant transmission mode.

With reference to the fifth aspect, in a possible design, the transmission mode comprises a single-resource transmission mode or a multi-resource transmission mode.

With reference to the fifth aspect, in a possible design, when the determined transmission resource is a resource of the multi-resource transmission mode, the first device further obtains transmission parameter indication information of the multi-resource transmission mode.

With reference to the fifth aspect, in a possible design, the transmission parameter indication information of the multi-resource transmission mode comprises at least one of the following: a quantity of subresources in each group of multi-resource transmissions; a frequency hopping parameter on each subresource in each group of multi-resource transmissions; a modulation scheme of a subresource in each group of multi-resource transmissions; a coding scheme of a subresource in each group of multi-resource transmissions; and a reference signal configuration parameter on each subresource in each multi-resource transmission.

With reference to the fifth aspect, in a possible design, when the determined transmission resource is a resource configured in the multi-resource transmission mode, a transmission parameter for an initial transmission is different from a transmission parameter for a retransmission in the multi-resource transmission mode.

With reference to the fifth aspect, in a possible design, before the receiving, by a first device, first control information, the method further comprises:
sending, by the first device, second data and/or second control information, where the second control information indicates a transmission format of the second data.

With reference to the fifth aspect, in a possible design, the second control information and the second data are transmitted on a same channel, or transmitted on different channels.

With reference to the fifth aspect, in a possible design, the second control information comprises at least one of the following information:
a current quantity of transmission times;
indication information indicating whether the first device receives an acknowledgement, or a current retransmission type of the first device; and
indication information indicating whether transmit power of the first device can be reduced.

With reference to the fifth aspect, in a possible design, the second control information further comprises request information for a transmission mode (for example, for directly requesting a transmission mode, or requesting to switch a transmission mode).

With reference to the fifth aspect, in a possible design, when a service priority of the first device is greater than a particular threshold, the first device sends the request information for the transmission mode.

With reference to the fifth aspect, in a possible design, the indication information of the transmission resource is further used to:
indicate whether the transmission resource used for sending the first data can still be used for sending the second data; or
indicate whether a transmission resource used for sending the second data is the same as the transmission resource for sending the first data.

With reference to the fifth aspect, in a possible design, the obtaining, by a first device, first control information comprises:
obtaining, by the first device, the first control information based on different control information formats or control information transmission parameters.

With reference to the fifth aspect, in a possible design, the control information transmission parameter comprises any one of the following information:
a CRC mask used in transmission of control information;
a generation parameter of a scrambling sequence (for example, an initial value of a generated sequence);
a generation parameter of a demodulation reference signal DMRS (such as a sequence identifier, a cyclic shift value of a sequence, and an OCC of the sequence); or
a control channel format (such as a control channel of level-1 scheduling or a control channel of level-2 scheduling).

With reference to the fifth aspect, in a possible design, the determining a transmission resource for first data based on the first control information comprises:
determining the transmission resource for the first data based on the indication information of the transmission mode, where different transmission modes correspond to different transmission resources or different transmission resource pools.

According to a sixth aspect, this application provides a first device, including:
a processing unit, configured to: obtain first control information, where the first control information comprises at least one of indication information of a transmission mode and indication information of a transmission resource; and determine a transmission resource for first data based on the first control information; and
a transceiver unit, configured to send the first data on the determined transmission resource.

With reference to the sixth aspect, in a possible design, the transmission mode comprises a grant-based transmission mode or a without-grant transmission mode.

With reference to the sixth aspect, in a possible design, the transmission mode comprises a contention-based without-grant transmission mode or a preconfiguration-based without-grant transmission mode.

With reference to the sixth aspect, in a possible design, the transmission mode comprises a single-resource transmission mode or a multi-resource transmission mode.

With reference to the sixth aspect, in a possible design, when the determined transmission resource is a resource configured in the multi-resource transmission mode, the processing unit is further configured to obtain transmission parameter indication information of the multi-resource transmission mode.

With reference to the sixth aspect, in a possible design, the transmission parameter indication information of the multi-resource transmission mode comprises at least one of the following: a quantity of subresources in each group of multi-resource transmissions; a frequency hopping parameter on each subresource in each group of multi-resource transmissions; a modulation scheme of a subresource in each group of multi-resource transmissions; a coding scheme of a subresource in each group of multi-resource transmissions; and a reference signal configuration parameter on each subresource in each multi-resource transmission.

With reference to the sixth aspect, in a possible design, when the determined transmission resource is a resource configured in the multi-resource transmission mode, a transmission parameter for an initial transmission is different from a transmission parameter for a retransmission in the multi-resource transmission mode.

With reference to the sixth aspect, in a possible design, before receiving the first control information, the transceiver unit is further configured to:
send second data and/or second control information, where the second control information indicates a transmission format of the second data.

With reference to the sixth aspect, in a possible design, the second control information and the second data are transmitted on a same channel, or transmitted on different channels.

With reference to the sixth aspect, in a possible design, the second control information comprises at least one of the following information:
a current quantity of transmission times;
indication information indicating whether the first device receives an acknowledgement, or a current retransmission type of the first device; and
indication information indicating whether transmit power of the first device can be reduced.

With reference to the sixth aspect, in a possible design, the second control information further comprises request information for a transmission mode, and the request information for the transmission mode is used to directly request a transmission mode, or request to switch a transmission mode.

With reference to the sixth aspect, in a possible design, when a service priority of the first device is greater than a particular threshold, the first device sends the request information for the transmission mode.

With reference to the sixth aspect, in a possible design, the indication information of the transmission resource is further used to:
indicate whether the transmission resource used for sending the first data can still be used for sending the second data; or
indicate whether a transmission resource used for sending the second data is the same as the transmission resource for sending the first data.

With reference to the sixth aspect, in a possible design, when obtaining the first control information, the processing unit is specifically configured to:
obtain the first control information based on different control information formats or control information transmission parameters.

With reference to the sixth aspect, in a possible design, the control information transmission parameter comprises any one of the following information:
a CRC mask used in transmission of control information;
a generation parameter of a scrambling sequence (for example, an initial value of a generated sequence);
a generation parameter of a demodulation reference signal DMRS (such as a sequence identifier, a cyclic shift value of a sequence, and an OCC of the sequence); or
a control channel format (such as a control channel of level-1 scheduling or a control channel of level-2 scheduling).

With reference to the sixth aspect, in a possible design, when determining the transmission resource for the first data based on the first control information, the processing unit is specifically configured to:
determine the transmission resource for the first data based on the indication information of the transmission mode, where different transmission modes correspond to different transmission resources or different transmission resource pools.

According to a seventh aspect, this application provides a communication method, including:
receiving, by a first device, first control information sent by a second device, where the first control information comprises indication information of stopping using a without-grant resource for transmission; and
stopping, based on the first control information, sending data.

In the foregoing solution, when receiving the first control information sent by the second device, the first device stops, based on the first control information, sending the data, so that the second device performs transmission management when congestion occurs. When a network is congested, the second device may select some first devices to stop data transmission.

With reference to the seventh aspect, in a possible design, the indication information of stopping using a without-grant resource for transmission comprises a configuration parameter for stopping a current transmission, and the configuration parameter comprises any one of the following information:
a start time and an end time of a timer for transmission suspension; and
a time interval for transmission suspension.

With reference to the seventh aspect, in a possible design, the first device starts sending the data when the following condition is satisfied:
the timer for transmission suspension expires, or
the time interval for transmission suspension elapses.

With reference to the seventh aspect, in a possible design, before receiving the first control information, the first device further sends second control information to the second device, where the second control information indicates a service priority or a service type of the first device.

With reference to the seventh aspect, in a possible design, the method further comprises:
when the service priority of the first device satisfies a preset condition (for example, the priority becomes higher after suspension or is greater than a particular threshold), starting, by the first device, transmission of the data before the timer for transmission suspension expires or before the time interval for transmission suspension elapses.

According to an eighth aspect, this application provides a first device, including:
a transceiver unit, configured to receive first control information sent by a second device, where the first control information comprises indication information of stopping using a without-grant resource for transmission; and
a processing unit, configured to stop, based on the first control information, sending data.

With reference to the eighth aspect, in a possible design, the indication information of stopping using a without-grant resource for transmission comprises a configuration parameter for stopping a current transmission, and the configuration parameter comprises any one of the following information:
a start time and an end time of a timer for transmission suspension; and
a time interval for transmission suspension.

With reference to the eighth aspect, in a possible design, the transceiver unit starts sending the data when the following condition is satisfied:
the timer for transmission suspension expires, or
the time interval for transmission suspension elapses.

With reference to the eighth aspect, in a possible design, before receiving the first control information, the transceiver unit is further configured to send second control information to the second device, where the second control information indicates a service priority or a service type of the first device.

With reference to the eighth aspect, in a possible design, the transceiver unit is further configured to:
when the service priority of the first device satisfies a preset condition (for example, the priority becomes higher after suspension or is greater than a particular threshold), start transmission of the data before the timer for transmission suspension expires or before the time interval for transmission suspension elapses.

According to a ninth aspect, this application provides a without-grant communication method, including:
receiving, by a first device, configuration information sent by a base station, where the configuration information comprises a without-grant transmission resource and link quality information of an uplink;
determining, by the first device, a without-grant uplink transmission resource based on the configuration information; and
sending data on the without-grant uplink transmission resource.

According to the foregoing solution, congestion control is implemented based on measurement on the base station side and a measurement result indication, and efficiency of randomly contending for a resource pool can be improved.

With reference to the ninth aspect, in a possible design, the configuration information further comprises transmission parameter configuration information of the without-grant transmission resource.

With reference to the ninth aspect, in a possible design, the first device determines the without-grant uplink transmission resource based on the configuration information and a service priority of the first device.

With reference to the ninth aspect, in a possible design, the link quality information of the uplink comprises any one of the following information:
signal quality of the uplink (such as a CQI, RSRP, an SNR, and an SINR); and
congestion status indication information of each subresource on the uplink.

According to a tenth aspect, this application provides a first device, including:
a transceiver unit, configured to receive configuration information sent by a base station, where the configuration information comprises a without-grant transmission resource and link quality information of an uplink; and
a processing unit, configured to determine a without-grant uplink transmission resource based on the configuration information, where
the transceiver unit is further configured to send data on the without-grant uplink transmission resource.

With reference to the tenth aspect, in a possible design, the configuration information further comprises transmission parameter configuration information of the without-grant transmission resource.

With reference to the tenth aspect, in a possible design, the processing unit is specifically configured to determine the without-grant uplink transmission resource based on the configuration information and a service priority of the first device.

With reference to the tenth aspect, in a possible design, the link quality information of the uplink comprises any one of the following information:
signal quality of the uplink (such as a CQI, RSRP, an SNR, and an SINR); and
congestion status indication information of each subresource on the uplink.

According to an eleventh aspect, this application provides a communication method, including:
sending, by a first device, data to a second device on a without-grant transmission resource;
determining whether an error occurs in transmission of the data; and
switching a data transmission mode or a transmission resource if the error occurs.

According to the foregoing solution, when the error occurs in without-grant transmission, the first device switches the data transmission mode or the transmission resource, to improve a data transmission processing capability of the first device in an error case, and decrease a data transmission delay in the error case.

With reference to the eleventh aspect, in a possible design, the error comprises:
the first device still receives no positive acknowledgement message after sending the data for N consecutive times, where N is a positive integer not greater than a predefined threshold.

With reference to the eleventh aspect, in a possible design, the switching a data transmission mode comprises:
switching from a contention-based without-grant transmission mode to a preconfiguration-based without-grant transmission mode.

With reference to the eleventh aspect, in a possible design, the switching a transmission resource comprises:
switching from the without-grant transmission resource to a reserved resource.

With reference to the eleventh aspect, in a possible design, the method further comprises:
sending, by the first device to the second device, type information of a transmission resource for the data, such as a contention-based without-grant transmission resource, a preconfiguration-based without-grant transmission resource, and a system-based reserved resource.

With reference to the eleventh aspect, in a possible design, the method further comprises:
receiving, by the first device, indication information sent by the second device for switching from the reserved resource to the without-grant resource.

According to a twelfth aspect, this application provides a first device, including:
a transceiver unit, configured to send data to a second device on a without-grant transmission resource; and
a processing unit, configured to: determine whether an error occurs in transmission of the data; and switch a data transmission mode or a transmission resource if the error occurs.

With reference to the twelfth aspect, in a possible design, the error comprises:
the first device still receives no positive acknowledgement message after sending the data for N consecutive times, where N is a positive integer not greater than a predefined threshold.

With reference to the twelfth aspect, in a possible design, the switching a data transmission mode comprises:
switching from a contention-based without-grant transmission mode to a preconfiguration-based without-grant transmission mode.

With reference to the twelfth aspect, in a possible design, the switching a transmission resource comprises:
switching from the without-grant transmission resource to a reserved resource.

With reference to the twelfth aspect, in a possible design, the transceiver unit is further configured to:
send, to the second device, type information of a transmission resource for the data, such as a contention-based without-grant transmission resource, a preconfiguration-based without-grant transmission resource, and a system-based reserved resource.

With reference to the twelfth aspect, in a possible design, the transceiver unit is further configured to:
receive indication information sent by the second device for switching from the reserved resource to the without-grant resource.

According to a thirteenth aspect, this application provides a control information transmission method, including: obtaining, by a first device, first control information (such as uplink control information UCI); and using a without-grant transmission resource to send the first control information to a base station.

According to the foregoing solution, unwanted grant-based transmissions during feedback of the first control information can be reduced, and the without-grant transmission can be fully used, thereby improving transmission efficiency.

With reference to the thirteenth aspect, in a possible design, the first control information comprises at least one of the following:
channel state information (CSI);
HARQ acknowledgement information; and
a scheduling request (Scheduling Request, SR).

With reference to the thirteenth aspect, in a possible design, the channel state information comprises at least one of the following:
signal quality information (an SNR, an SINR, a CQI, an RSSI, RSRP, and RSRQ);
precoding indication (PMI) information;
beam indication (BI) information; and
rank indication (RI) information.

With reference to the thirteenth aspect, in a possible design, the using a without-grant transmission resource to send the first control information to a base station comprises: using a without-grant uplink data channel to send the first control information to the base station.

With reference to the thirteenth aspect, in a possible design, when the using a without-grant uplink data channel to send the first control information to the base station is performed, indication information sent by the base station for disabling a transmission on a grant-based uplink control channel by the first device is received.

With reference to the thirteenth aspect, in a possible design, the using a without-grant uplink data channel to send the first control information to the base station comprises: using the without-grant uplink data channel to send a first part of the first control information to the base station, and using a grant-based uplink data channel to send a second part of the first control information to the base station.

With reference to the thirteenth aspect, in a possible design, the using a without-grant resource to send the first control information to a base station comprises: using a without-grant uplink control channel to send the first control information to the base station.

With reference to the thirteenth aspect, in a possible design, the using a without-grant resource to send the first control information to a base station comprises: using the without-grant uplink control channel to send a first part of the first control information to the base station, and using a without-grant uplink data channel to send a second part of the first control information to the base station.

With reference to the thirteenth aspect, in a possible design, the using a without-grant transmission resource to send the first control information to a base station comprises: using a grant-based resource to send a first part of the first control information to the base station, and using the without-grant resource to send a second part of the first control information to the base station.

With reference to the thirteenth aspect, in a possible design, before the using, by the first device, a without-grant transmission resource to send the first control information to a base station, the method further comprises:
receiving, by the first device, indication information sent by the base station for reporting the first control information.

With reference to the thirteenth aspect, in a possible design, the using a without-grant transmission resource to send the first control information to a base station comprises:
using a without-grant uplink carrier to send the first control information on a downlink carrier corresponding to the grant-based uplink carrier; or
using a grant-based uplink carrier to send the first control information on a downlink carrier corresponding to the without-grant uplink carrier.

According to a fourteenth aspect, this application provides a first device, including:
a processing unit, configured to obtain first control information (such as uplink control information UCI); and
a transceiver unit, configured to use a without-grant transmission resource to send the first control information to a base station.

With reference to the fourteenth aspect, in a possible design, the first control information comprises at least one of the following:
channel state information (CSI);
HARQ acknowledgement information; and
a scheduling request (Scheduling Request, SR).

With reference to the fourteenth aspect, in a possible design, the channel state information comprises at least one of the following:
signal quality information (an SNR, an SINR, a CQI, an RSSI, RSRP, and RSRQ);
precoding indication information (PMI);
beam indication (BI) information; and
rank indication (RI) information.

With reference to the fourteenth aspect, in a possible design, when using the without-grant transmission resource to send the first control information to the base station, the transceiver unit is specifically configured to:
use a without-grant uplink data channel to send the first control information to the base station.

With reference to the fourteenth aspect, in a possible design, when using the without-grant uplink data channel to send the first control information to the base station, the transceiver unit is further configured to receive indication information sent by the base station for disabling a transmission on a grant-based uplink control channel by the first device.

With reference to the fourteenth aspect, in a possible design, when using the without-grant uplink data channel to send the first control information to the base station, the transceiver unit is specifically configured to:
use the without-grant uplink data channel to send a first part of the first control information to the base station, and use a grant-based uplink data channel to send a second part of the first control information to the base station.

With reference to the fourteenth aspect, in a possible design, when using the without-grant resource to send the first control information to the base station, the transceiver unit is specifically configured to:
use a without-grant uplink control channel to send the first control information to the base station.

With reference to the fourteenth aspect, in a possible design, when using the without-grant resource to send the first control information to the base station, the transceiver unit is specifically configured to:
use the without-grant uplink control channel to send a first part of the first control information to the base station, and use a without-grant uplink data channel to send a second part of the first control information to the base station.

With reference to the fourteenth aspect, in a possible design, when using the without-grant transmission resource to send the first control information to the base station, the transceiver unit is specifically configured to:
use a grant-based resource to send a first part of the first control information to the base station, and use the without-grant resource to send a second part of the first control information to the base station.

With reference to the fourteenth aspect, in a possible design, before using the without-grant transmission resource to send the first control information to the base station, the transceiver unit is further configured to:
receive indication information sent by the base station for reporting the first control information.

With reference to the fourteenth aspect, in a possible design, when using the without-grant transmission resource to send the first control information to the base station, the transceiver unit is specifically configured to:
use a without-grant uplink carrier to send the first control information on a downlink carrier corresponding to the grant-based uplink carrier; or
use a grant-based uplink carrier to send the first control information on a downlink carrier corresponding to the without-grant uplink carrier.

According to a fifteenth aspect, this application provides a terminal device. A structure of the terminal device comprises a transceiver, a memory, and a processor. The memory is configured to store a group of programs. The processor is configured to invoke the programs stored in the memory, to perform the method performed by the first device in any one of the foregoing aspects.

According to a sixteenth aspect, this application provides a network device. A structure of the access network device comprises a transceiver, a memory, and a processor. The memory is configured to store a group of programs. The processor is configured to invoke the programs stored in the memory, to perform the method performed by the first device or the base station in any possible design of any one of the foregoing aspects.

According to a seventeenth aspect, this application provides a computer storage medium, configured to store a computer software instruction used by the first device in the foregoing aspects. The computer software instruction comprises a program designed to perform the foregoing aspects.

According to an eighteenth aspect, this application provides a computer storage medium, configured to store a computer software instruction used by the second device or the base station in the foregoing aspects. The computer software instruction comprises a program designed to perform the foregoing aspects.

### BRIEF DESCRIPTION OF DRAWINGS

FIG. 1 is a flowchart of a communication method according to this application;
FIG. 2A, FIG. 2B, FIG. 2C, and FIG. 2D are schematic diagrams of frame structures of data sent by a first device to a second device according to this application;
FIG. 3 is a schematic diagram of indicating, by a second device, an acknowledgement message for uplink data to a group of first devices according to this application;
FIG. 4 is a schematic diagram of associating locations of acknowledgement messages in an acknowledgement message group with different resource locations according to this application;
FIG. 5 is a schematic diagram of an overlap between transmission resources of first devices according to this application;
FIG. 6 is a flowchart of another communication method according to this application;
FIG. 7A is a schematic diagram of an acknowledgement process between a base station and UE according to this application;
FIG. 7B is a schematic diagram of transmission parameter configuration during data transmission in a multi-resource transmission mode according to this application;
FIG. 8 is a flowchart of another communication method according to this application;
FIG. 9 is a flowchart of another communication method according to this application;
FIG. 10 is a flowchart of another communication method according to this application;
FIG. 11 is a flowchart of another communication method according to this application;
FIG. 12 is a structural diagram of a communications apparatus according to this application;
FIG. 13 is a structural diagram of a terminal device according to this application;
FIG. 14 is a structural diagram of a communications apparatus according to this application;
FIG. 15 is a structural diagram of a network device according to this application;
FIG. 16 is a structural diagram of a communications apparatus according to this application;
FIG. 17 is a structural diagram of a terminal device according to this application;
FIG. 18 is a structural diagram of a communications apparatus according to this application;
FIG. 19 is a structural diagram of a terminal device according to this application;
FIG. 20 is a structural diagram of a communications apparatus according to this application;
FIG. 21 is a structural diagram of a terminal device according to this application;
FIG. 22 is a structural diagram of a communications apparatus according to this application;
FIG. 23 is a structural diagram of a terminal device according to this application;
FIG. 24 is a structural diagram of a communications apparatus according to this application; and
FIG. 25 is a structural diagram of a terminal device according to this application.

### DESCRIPTION OF EMBODIMENTS

To make the objectives, technical solutions, and advantages of this application clearer, the following further describes this application in detail with reference to the accompanying drawings.

This application provides a communication method and a communications apparatus, to overcome vulnerability of without-grant uplink transmissions to a collision in the prior art. The method and the apparatus are based on a same inventive concept. The method and the apparatus have similar principles for resolving a problem. Therefore, mutual reference may be made between implementation of the apparatus and implementation of the method, and a same part is not described in detail.

"A plurality of' in this application means two or more than two.

In addition, it should be understood that, in descriptions of this application, terms such as "first" and "second" are merely used for the purpose of differentiation, and cannot be understood as indicating or suggesting relative importance, nor understood as indicating or suggesting a sequence.

The communication method provided in the embodiments of this application is mainly specific to a process of data transmission between a terminal device and a network device in a radio access network. The terminal device may include various handheld devices having a wireless communication function, an in-vehicle device, a wearable device, a computing device, or another processing device connected to a wireless modem, and user equipment (User Equipment, UE) in various forms, a mobile station (Mobile station, MS), terminal equipment (Terminal Equipment), a relay device, and the like. The network device may include various apparatuses providing a communication function for the terminal device in the radio access network, for example, may be a base station. The base station may include a macro base station in various forms, a micro base station, a relay station, an access point, and the like. The base station may have different names in systems using different radio access technologies. For example, the base station is referred to as an evolved NodeB (evolved NodeB, eNB or eNodeB for short) in a Long Term Evolution (Long Term Evolution, LTE) network, and is referred to as a NodeB (NodeB) in a 3rd generation 3G network.

A technology described in the embodiments of this application may be applicable to an LTE system, or other wireless communications systems using various radio access technologies, for example, systems using access technologies such as Code Division Multiple Access, Frequency Division Multiple Access, Time Division Multiple Access, orthogonal frequency division multiple access, and single carrier frequency division multiple access. In addition, the technology may be further applicable to a subsequent evolved system of the LTE system, such as a 5th generation 5G system. For clarity, in the embodiments of this application, only the LTE system is used as an example for description below, in which the terminal device is UE and the network device is an eNB.

It should be noted that in the embodiments of this application, a first device may be a terminal device, and a second device may be a network device or a relay device.

Currently, a without-grant uplink transmission mode allows a terminal device to directly send data without uplink scheduling, thereby reducing a transmission delay. However, while the transmission delay is reduced, potential collisions in uplink transmission of the terminal device are increased, and a difficulty of the terminal device in selecting an uplink transmission resource is increased. Therefore, in the embodiments of this application, a communication method is designed to confirm, using an acknowledgement message group, whether data sent by a group of terminal devices is successfully receivedusing. In this way, a collision probability in uplink transmission of the terminal device can be reduced, a delay in the entire transmission can be decreased, and feedback overheads of an acknowledgement message can be reduced.

The following specifically describes communication solutions provided in this application with reference to the accompanying drawings.

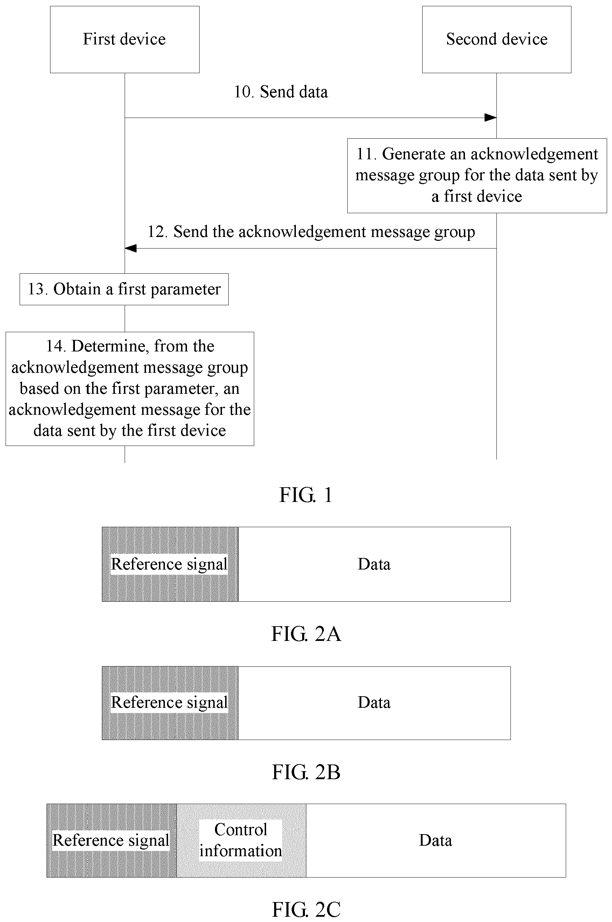

FIG. 1 is a flowchart of a first communication method according to this application. The method comprises the following steps.

Step 10: A second device receives data sent by a first device.

It should be noted that the data sent by the first device to the second device is sent by the first device using a without-grant transmission resource.

In a possible design, a frame structure of the data sent by the first device to the second device comprises a reference signal and data. Specifically, FIG. 2A is a schematic diagram of a frame structure when a transmission mode is TDM, and FIG. 2B is a schematic diagram of a frame structure when a transmission mode is FDM.

In FIG. 2A and FIG. 2B, a horizontal axis represents time, a vertical axis represents a frequency domain, and a reference signal (reference Signal, RS) is located before data.

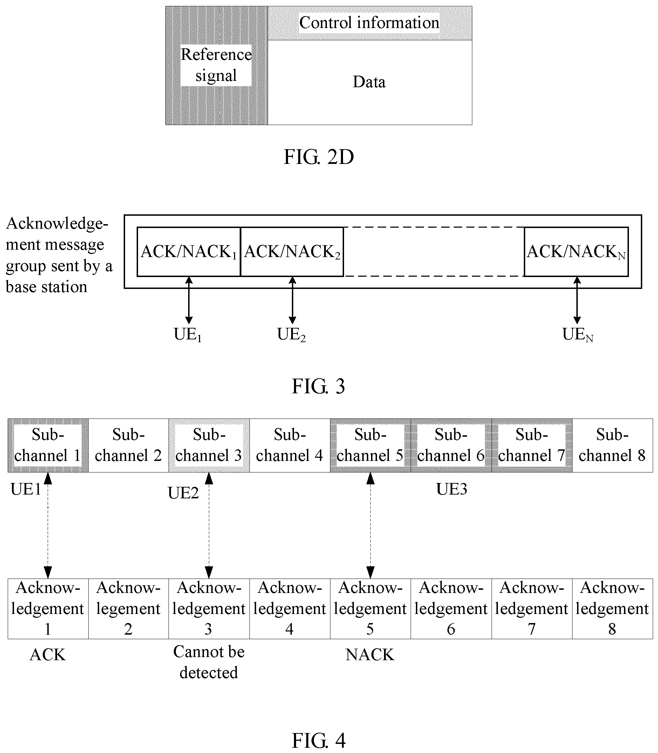

In another possible design, a frame structure of the data sent by the first device to the second device comprises a reference signal, control information, and data. Specifically, FIG. 2C is a schematic diagram of a frame structure when a transmission mode is TDM, and FIG. 2D is a schematic diagram of a frame structure when a transmission mode is FDM.

In FIG. 2C and FIG. 2D, a horizontal axis represents time, a vertical axis represents a frequency domain, and a reference signal is located before data and control information. The data and the control information may be located on different time domain resources, as shown in FIG. 2C, or may be located on a same time domain resource, as shown in FIG. 2D.

The control information and the data may be transmitted on a same channel, or may be transmitted on different channels. Information carried in the control information comprises at least one of a location of a time-frequency resource occupied in data transmission, an MCS used in the data transmission, whether currently transmitted data is a initial transmission or a retransmission, a quantity of retransmission times of the currently transmitted data, and some other optional signaling. For example:
(1) Power headroom indication information, where this signaling may be used to indicate whether there is still reserved power for the first device currently. Further, optionally, if one bit is used, "1" indicates that there is still reserved power, and "0" indicates that there is no reserved power. Whether there is reserved power is considered relative to a step size corresponding to an adjustment value of transmit power control (Transmit Power Control, TPC) that is sent by the second device. When there is reserved power, it indicates that remaining power is not less than a power step size; or when there is no reserved power, it indicates that remaining power is less than a power step size. Therefore, when a path loss of the first device changes greatly, the first device sends the power headroom indication information to the second device, so that the second device can determine a corresponding TPC adjustment value based on a value of the power headroom indication information.
(2) Indication information indicating whether there is data, where in this case, whether there is data being sent in a current without-grant transmission is indicated to the second device using the control information.

Optionally, the first device may send only one of the RS, the control information, and the data in a particular transmission area. For example, the first device may send only the RS to the second device, to indicate the end of data transmission of the first device or no data transmission currently. For another example, the first device may send corresponding control information or request information to the second device using the RS and the control. For another example, when an uplink transmission resource and parameter of the first device are the same as those used in a previous transmission, only the RS and the data are sent.

The RS herein may be used by the second device to detect whether the first device exists, and optionally, used to identify different UEs, or used for channel estimation.

Optionally, in the foregoing examples, a different RS may be transmitted each time. This can reduce unwanted message transmissions on the first device side and reduce power consumption, and different RSs are used, so that the second device can identify various pieces of configuration information correspondingly transmitted by the first device. For example, different RSs are used to indicate: whether a current without-grant transmission comprises uplink control information, whether the current without-grant transmission comprises uplink data information, whether the current without-grant transmission is an initial transmission, and so on.

Step 11: The second device generates an acknowledgement message group for the data sent by the first device, where the acknowledgement message group comprises an acknowledgement message of the second device for the data sent by the at least one first device.

An acknowledgement message of the second device for the data sent by the first device comprises positive or negative acknowledgement information for detection of the control information or the data sent by the first device. Optionally, the acknowledgement message of the second device for the data sent by the first device further comprises indication information indicating whether the first device or a transmission resource for the data sent by the first device has a collision, and/or indication information indicating whether the first device or a transmission resource for the data sent by the first device is idle.

Further, in a possible embodiment, a detection status of without-grant data sent by the first device may be defined based on a status of detection performed by the second device on the RS, the control information, and the data. For details, refer to Table 1.

**Table 1**

| RS detection status | Control information detection status | Data detection status | Acknowledgement message |
|---|---|---|---|
| Effectively detected | Correctly detected | Correctly detected | Acknowledgement (ACK) |
| Effectively detected | Correctly detected | Cannot be correctly detected | Negative acknowledgement (NACK) |
| Effectively detected | Cannot be correctly detected | Cannot be correctly detected | Collision (collision) |
| Cannot be detected | Cannot be correctly detected | Cannot be correctly detected | Idle (Idle) |

It should be noted that, that the data and the control information is "correctly detected" means that a cyclic redundancy check (Cyclic Redundancy Check, CRC) check result after the data or the control information is decoded is correct.

That the data and the control information "cannot be correctly detected" means that a CRC check result after the data and/or the control information is decoded is incorrect.

That the RS is "effectively detected" means that it is detected that energy of the RS is greater than a preset threshold.

That the RS "cannot be detected" means that it is detected that energy of the RS is less than a preset threshold.

A status detected by the second device for the first device is precisely defined using an RS, control information, and data in a without-grant uplink transmission, so that the first device makes a corresponding transmission adjustment after receiving a corresponding status, to reduce potential collisions.

Optionally, detection of the RS may also be indicated using an energy value of a resource on which the control information and/or the data is located. For example, reference signal received power (Reference signal received power, RSRP), a received signal strength indicator (Received Signal Strength Indicator, RSSI), reference signal received quality (Reference Signal Received Quality, RSRQ)/a signal to interference plus noise ratio (Signal to Interference plus Noise Ratio, SINR), a signal-to-noise ratio (Signal-Noise-Ratio, SNR), or an interference to noise ratio (Interference to Noise Ratio, INR) may be used to represent the energy value. For details, refer to Table 2.

**Table 2**

| Energy detection status | Control information detection status | Data detection status | Acknowledgement message |
|---|---|---|---|
| Effectively detected | Correctly detected | Correctly detected | Acknowledgement (ACK) |
| Effectively detected | Correctly detected | Cannot be correctly detected | Negative acknowledgement (NACK) |
| Effectively detected | Cannot be correctly detected | Cannot be correctly detected | Collision (collision) |
| Cannot be detected | Cannot be correctly detected | Cannot be correctly detected | Idle (Idle) |

A status detected by the second device for the first device is precisely defined using an RS, control information, and data in a without-grant uplink transmission, so that the first device makes a corresponding transmission adjustment after receiving a corresponding status, to reduce potential collisions. In addition, replacing the reference signal with detected energy helps the first device side to perform corresponding measurement.

In a possible implementation, a status of detection performed by the second device on without-grant data sent by the first device may alternatively be indicated based on a control information detection status and a data detection status. For example, for various specific states, refer to Table 3.

**Table 3**

| Control information detection status | Data detection status | Acknowledgement message |
|---|---|---|
| Correctly detected | Correctly detected | Acknowledgement (ACK) |
| Correctly detected | Cannot be correctly detected | Negative acknowledgement (NACK) |
| Cannot be correctly detected | Cannot be correctly detected | Idle (Idle) |

In this way, when the first device transmits no RS, a status detected by the second device for the first device is precisely defined using without-grant uplink control information and data, so that the first device makes a corresponding transmission adjustment after receiving a corresponding status, to reduce potential collisions.

Step 12: The second device sends the acknowledgement message group to the first device.

The acknowledgement message group comprises the acknowledgement message for the data received by the second device from the at least one first device. Each acknowledgement message in the acknowledgement message group is an acknowledgement to the data sent by the at least one first device, and each acknowledgement message in the acknowledgement message group is generated through an AND logical operation on the acknowledgement message for the at least one first device.

Optionally, the acknowledgement message generated through the AND logical operation corresponds to a same first parameter.

Specifically, acknowledgement messages of the second device for a group of first devices are sent to the group of first devices, and then a location of an acknowledgement message for each first device in the acknowledgement message group needs to be determined based on a transmission parameter used when each first device performs a without-grant uplink transmission.

Further, the acknowledgement message further comprises index information of at least one transmission resource in the reference signal, the control information, and the data that are sent by the first device.

Step 13: The first device obtains a first parameter, where the first parameter is used to determine an acknowledgement message for the data sent by the first device.

In a possible implementation, the first parameter comprises indication information of a location, in the acknowledgement message group, of the acknowledgement message for the data sent by the first device.

In a possible implementation, the first parameter comprises indication information of a transmission resource for the data sent by the first device, where the transmission resource comprises at least one of the following resources: a time domain resource, a frequency domain resource, a code domain resource, and a space domain resource. The code domain resource comprises indication information of a sequence (such as a root sequence number of the sequence), indication information of a cyclic shift of the sequence, and indication information of an orthogonal cover code of the sequence. The space domain resource comprises a used beam resource, a precoding vector, and a spatial layer or stream.

As shown in FIG. 3, the second device uses a group of downlink control information (Downlink Control Information, DCI) signaling to indicate acknowledgement messages for uplink data to a group of first devices.

As shown in FIG. 3, when the second device is a base station, and the first device is UE, the second device uses the DCI signaling to send the acknowledgement messages to the group of first devices. For example, the acknowledgement messages include fields for acknowledgement to a total of N first devices (N is a positive integer not less than 1), respectively, and each field corresponds to an acknowledgement message for M bits of uplink data (M is a positive integer not less than 1). As shown in FIG. 3, ACK/NACK₁ is an acknowledgement message for UE₁, ACK/NACK₂ is an acknowledgement message for UE₂, ..., and ACK/NACK_{N} is an acknowledgement message for UE_{N}.

Further, the base station needs to determine which part of the DCI signaling is used for an acknowledgement to uplink data of each UE in the first devices. Several optional implementations are provided below.

Implementation 1: A field corresponding to an acknowledgement message ACK/NACK for each UE in the entire DCI may be indicated by the base station to the UE in advance using RRC signaling. For example, the first location in the DCI is used for an acknowledgement message for the UE₁. For another example, the third location in the DCI is used for an acknowledgement message for the UE₂. In this way, the second device can use one piece of DCI to provide feedback to a group of UEs, and use signaling in advance to clearly indicate locations of acknowledgement messages for the UEs in the acknowledgement message group, so that physical layer signaling overheads are reduced, and the UEs can correspond to respective acknowledgement messages.

Implementation 2: A location of a field corresponding to an acknowledgement message ACK/NACK for each UE in the entire DCI is associated with an uplink transmission resource of the UE. For example, the location may be associated with a resource index of a transmission resource used for a without-grant physical uplink shared channel (Physical Uplink Shared Channel, PUSCH). For example, a minimum index, a maximum index, an index of a middlemost resource, or an index of another predefined transmission location of a transmission resource used for a data channel (such as the PUSCH) is used. Alternatively, a location of a field corresponding to an acknowledgement message ACK/NACK for each UE in the entire DCI may be indicated using an index of a resource on which control information of without-grant data is located. For example, the without-grant transmission resource comprises a total of N sub-channels. Each sub-channel may be one physical resource block (Physical Resource Block, PRB) or a plurality of PRBs in frequency domain, and occupy at least one symbol in time domain. Each sub-channel may be allocated to different UEs for use. In other words, the different UEs need to select resources in sub-channels. FIG. 4 shows a case of associating locations of acknowledgement messages in an acknowledgement message group with different resource locations.

As shown in FIG. 4, UE1 sends data on a sub-channel 1, UE2 sends data on a sub-channel 3, and UE3 sends data on sub-channels 5, 6, and 7. A case detected on the base station side is as follows: On the sub-channel 1, data is successfully detected; on the sub-channel 3, arrival of UE is detected, but no data can be detected; on the sub-channels 5, 6, and 7, data is detected but is incorrectly decoded. Therefore, the base station makes the foregoing three acknowledgement messages correspond to the sub-channel 1, the sub-channel 3, and the sub-channel 5, respectively. The base station gives no acknowledgement to other sub-channels because no reliable message is detected.

Optionally, the sub-channels in the foregoing embodiment may be sub-channels on which the UEs send data, or may be sub-channels on which control information or reference signals sent by the UEs are located.

Optionally, the sub-channels may be different frequency domain sub-channels on a same time domain resource, or may be frequency domain sub-channels on different time domain resources.

Optionally, indication information of the sub-channels and the acknowledgement messages may be indicated to the UEs in information configured by the base station.

In this way, the base station can use one piece of DCI to provide feedback to a group of UEs, neither need to indicate an ID of each UE during the feedback, and nor need to send higher layer signaling to the UEs in advance to indicate locations of acknowledgement messages for the UEs in a DCI acknowledgement message group, so that signaling overheads are reduced, and the UEs can correspond to respective acknowledgement messages.

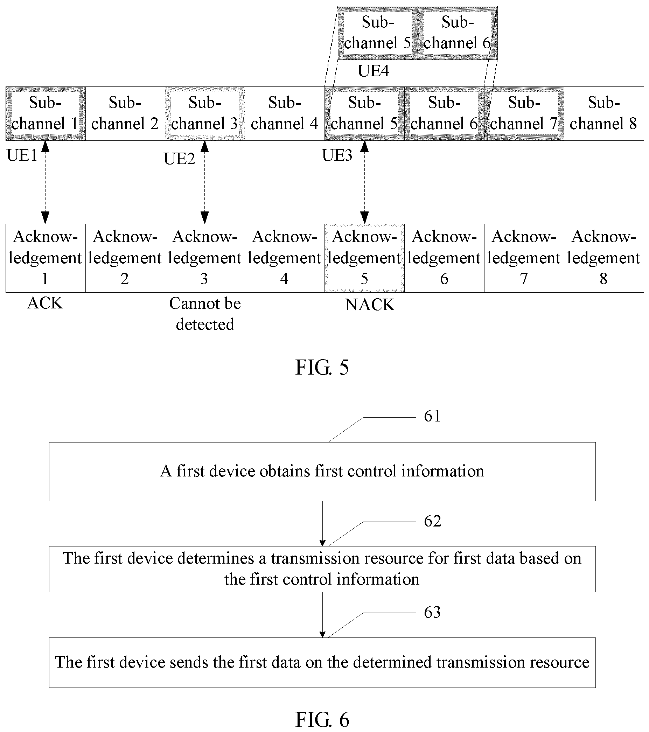

In the implementation 2, there is a scenario in which transmission resources of the first devices completely overlap or partially overlap. FIG. 5 is a schematic diagram of an indication method in a case in which resources of UE3 and UE4 partially overlap in the foregoing example.

As shown in FIG. 5, transmission resources of the UE3 and the UE4 completely overlap on a sub-channel 5 and a sub-channel 6. In this case, if acknowledgement messages are indicated simply using the sub-channel 5 according to the method in the implementation 2, the UE3 and the UE4 cannot correctly identify their respective acknowledgement messages, or even the base station cannot indicate the corresponding two acknowledgement messages to the UE3 and the UE4 in a different manner. Further, the following provides three possible implementations to avoid the foregoing collision.

In a first possible implementation, a field of an acknowledgement message provided by the base station for each UE comprises both an index of a transmission resource and a parameter of a reference signal. The parameter comprises a root sequence number of a sequence, and/or a cyclic shift value of the sequence, and/or an orthogonal cover code (OCC) of the sequence. For example, two bits are used to indicate an ACK/NACK, and two other bits are used to indicate a cyclic shift value of a sequence. In this way, a plurality of transmission parameters can be used to jointly indicate non-overlapping locations of acknowledgement messages for UEs.

For example, the UE3 uses the first of four cyclic shifts, and the UE3 uses the second of the four cyclic shifts. In this case, the base station may use 00 to indicate an acknowledgement to the UE3, and use 01 as an acknowledgement to the UE2.

Similarly, for example, the UE3 uses the first of four predefined root sequence numbers in a sequence, and a cyclic shift used by the UE3 is the second of the four predefined root sequence numbers. In this case, the base station may use 00 to indicate an acknowledgement to the UE3, and use 01 as an acknowledgement to the UE2.

In a second possible implementation, a location index of the data and a location index of the control information are jointly used to indicate UE corresponding to an acknowledgement message. In this way, a plurality of transmission parameters can be used to jointly indicate non-overlapping locations of acknowledgement messages for UEs.

Optionally, to reduce message feedback overheads, a location of a control message in a resource pool may be divided into M parts, such as 4, 8, or 10 parts. The base station may use log₂(M) bits to indicate a frequency domain location of the control message. For example, when M = 4, the base station may use two bits to indicate acknowledgement messages corresponding to locations of different control channels and different data channels.

Further, a DCI format used in the foregoing method for avoiding the overlap between user resources is different from a DCI format used when no overlap exists. In other words, when no overlap exists, a DCI format 1 is used; when an overlap exists, a DCI format 2 is used. The DCI format herein comprises a DCI type, a DCI size, a CRC mask (such as a used radio network temporary identifier (RNTI Radio Network Temporary Identity, RNTI)) used by the DCI, and a demodulation reference signal used by the DCI.

In a third possible implementation, one acknowledgement message is used to provide an acknowledgement to without-grant transmissions of a plurality of UEs. For example, one acknowledgement message is used to provide an ACK/NACK acknowledgement for M UEs.

Further, optionally, when one acknowledgement message is used for feedback of acknowledgements to the plurality of UEs, values of first parameters of the plurality of UEs herein are the same. In other words, when transmission resources of the plurality of UEs cannot be differentiated from each other or partially overlap, using one acknowledgement message for feedback of acknowledgements to the plurality of UEs can not only reduce feedback overheads, but can also resolve a problem that resources of the plurality of UEs collide or partially overlap.

In the foregoing example, when two UEs (which is equivalent to M = 2) overlap, if the two UEs are successfully detected, an ACK is sent; if either or both of the two UEs are not successfully detected, a NACK is sent. When receiving the ACK, the UE3 and the UE4 may continue to send new packets. When the UE3 and the UE4 receive the NACK at the same time, the two UEs each select a resource different from that of an initial transmission, to perform a retransmission. The foregoing method can reduce feedback overheads, and is good for a latency-insensitive service with a large quantity of users.

Implementation 3: A location of a field corresponding to an ACK/NACK for each UE in the entire DCI is associated only with a parameter of a reference signal of the UE. For example, similar to the implementation 2, only the parameter of the reference signal (such as the root sequence number, the cyclic shift (CS) value, and the orthogonal cover code (OCC)) may be associated with locations of acknowledgement messages for different UEs in the acknowledgement message group. In this way, a plurality of transmission parameters can be used to jointly indicate non-overlapping locations of acknowledgement messages for UEs.

Further, optionally, a common (common) or group-related radio network temporary identifier (RNTI Radio Network Temporary Identity, RNTI) or a common or group-related DCI search space is used to transmit the acknowledgement message ACK/NACK. In this case, the acknowledgement message ACK/NACK corresponds to a group of UEs, and the group of UEs are indicated using one RNTI associated with the group of UEs. This manner uses a group-related common RNTI or search space, and can reduce a quantity of blind detections performed by the UEs, and reduce UE detection complexity.

It can be learned that the acknowledgement message for the group of UEs is added to one DCI message, and transmission resource locations and reference signal parameters are used to correspond to locations of acknowledgement messages ACK/NACK for transmissions of different UEs in the DCI acknowledgement message group. Therefore, corresponding acknowledgements can be provided for data transmissions of the UEs, respectively.

Step 14: The first device determines, from the acknowledgement message group based on the first parameter, the acknowledgement message for the data sent by the first device.

It should be noted that the acknowledgement message group is transmitted in common control information. When the first device has not detected the acknowledgement message in the common control information, the first device detects the acknowledgement message in control information specific to the first device.

Further, the acknowledgement message further comprises at least one of indication information of a transmission mode and the indication information of the transmission resource.

FIG. 6 is a flowchart of a second communication method according to this application. The method comprises the following steps.

Step 61: A first device obtains first control information, where the first control information comprises at least one of indication information of a transmission mode and indication information of a transmission resource.

The transmission mode comprises a grant-based transmission mode or a without-grant transmission mode, a contention-based without-grant transmission mode or a preconfiguration-based without-grant transmission mode, and a single-resource transmission mode or a multi-resource transmission mode.

Further, before the first device performs step 61, the first device sends second data and/or second control information to a second device, where the second control information indicates a transmission format of the second data.

In this case, the indication information of the transmission resource indicates whether a transmission resource used for sending first data can still be used for sending the second data, or indicate whether a transmission resource used for sending the second data is the same as the transmission resource for sending the first data.

Optionally, the second control information and the second data are transmitted on a same channel, or transmitted on different channels.

The second control information comprises at least one of the following information: a current quantity of transmission times; indication information indicating whether the first device receives an acknowledgement, or a current retransmission type of the first device, for example, NACK-based retransmission or retransmission based on reception of no response; and indication information indicating whether transmit power of the first device can be reduced.

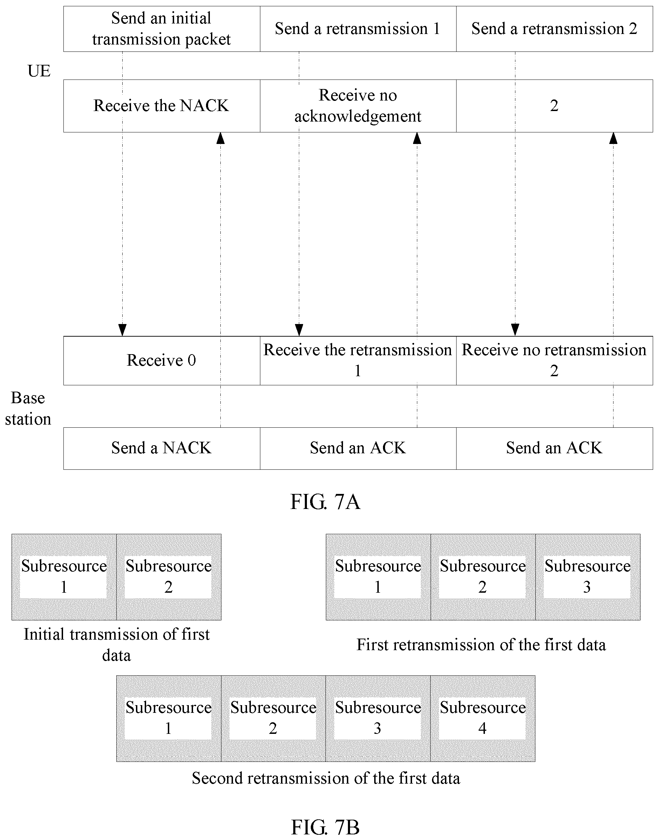

In an ultra-reliable and low latency communications (URLLC) scenario, both a downlink acknowledgement and an uplink transmission have a quite high reliability requirement. If a base station sends an ACK, but UE does not receive the ACK and still sends a retransmission, and if the base station is not aware of such a transmission scenario and an error occurs when the base station detects the message, the base station sends a NACK. On the contrary, if the base station knows that the current transmission is a retransmission from the UE based on reception of no response, the base station does not need to detect a subsequent data packet, but directly check whether a retransmitted packet previously sent by the UE is correctly received. If the retransmitted packet is correctly received, the base station directly feeds back an ACK. FIG. 7A is a schematic diagram of an acknowledgement process between the base station and the UE.

As shown in FIG. 7A, when UE1 sends a retransmission 1, the base station receives the retransmission 1 and then sends an ACK. However, it is possible that the UE does not receive the ACK message, and therefore the UE continues to send a retransmission 2, and notifies the base station that the current retransmission is a retransmission based on reception of no response. If the base station detects this information in control information, the base station does not need to detect data of the retransmission 2, but can directly return an ACK by checking whether the previous retransmission 1 is correctly received. In this way, a processing delay is reduced, and unwanted potential information transmissions can be reduced.

Optionally, the second control information further comprises request information for a transmission mode, used to directly request a transmission mode, or request to switch a transmission mode.

Specifically, the transmission mode comprises any two of the following transmission modes:
the grant-based transmission mode and the without-grant transmission mode; or
the contention-based without-grant transmission mode and the preconfiguration-based without-grant transmission mode; or
the multi-resource transmission mode and the single-resource transmission mode.

The multi-resource transmission mode and the single-resource transmission mode are switched between each other based on request information.

Optionally, the first device may send the request information for the transmission mode to the second device based on a service type or a service type change of the first device.

In this way, when the service type of the first device changes, the first device may actively request a corresponding transmission mode, so that the transmission mode better matches a service, and data transmission efficiency is improved.

Further, when a service priority of the first device is greater than a particular threshold, the first device sends the request information for the transmission mode.

Specifically, when obtaining the first control information, the first device obtains the first control information based on different control information formats or control information transmission parameters.

The control information transmission parameter comprises any one of the following information: a CRC mask used in transmission of control information; a generation parameter of a scrambling sequence, for example, an initial value of a generated sequence; a generation parameter of a demodulation reference signal (DMRS), such as a sequence identifier, a cyclic shift value of a sequence, and an orthogonal cover code (Orthogonal Cover Code, OCC) of the sequence; or a control channel format such as a control channel of level-1 scheduling or a control channel of level-2 scheduling.

Step 62: The first device determines a transmission resource for first data based on the first control information.

Specifically, when the transmission resource for the first data is determined based on the first control information, the transmission resource for the first data is determined based on the indication information of the transmission mode, where different transmission modes correspond to different transmission resources or different transmission resource pools. It should be noted that the resource pool herein is a set of transmission resources.

When the determined transmission resource is a resource configured in the multi-resource transmission mode, the first device further needs to obtain transmission parameter indication information of the multi-resource transmission mode.

The transmission parameter indication information of the multi-resource transmission mode comprises at least one of the following: a quantity of subresources in each group of multi-resource transmissions; a frequency hopping parameter on each subresource in each group of multi-resource transmissions; a modulation scheme of a subresource in each group of multi-resource transmissions; a coding scheme of a subresource in each group of multi-resource transmissions; and a reference signal configuration parameter on each subresource in each multi-resource transmission. The reference signal configuration parameter herein comprises at least one of the following: an initial value of a generated reference signal sequence; an identifier of the generated reference signal sequence; a cyclic shift value of the generated reference signal sequence; and an OCC of the generated reference signal sequence.

Optionally, when the determined transmission resource is a resource configured in the multi-resource transmission mode, retransmission in the multi-resource transmission mode may be performed.

Further, optionally, when the determined transmission resource is a resource configured in the multi-resource transmission mode, configuration of a transmission parameter for an initial transmission is different from that of a transmission parameter for a retransmission in the multi-resource transmission mode. The multi-resource transmission mode means that at least two transmission resources are used in a transmission of the first data. Transmission parameters of each transmission subresource, such as a frequency hopping parameter, a modulation scheme, a coding scheme, a reference signal configuration parameter, and an occupied time-frequency resource, may be configured independently.

As shown in FIG. 7B, two, three, and four subresources of a plurality of resources are used for an initial transmission, the first retransmission, and the second retransmission of the first data, respectively. Further, different transmission parameters may be configured for initial transmission and a retransmission, or for different retransmissions in the multi-resource transmission mode. In this way, the different transmission parameters in the multi-resource transmission mode can obtain a diversity gain between the different retransmissions, thereby improving system performance.

Step 63: The first device sends the first data on the determined transmission resource.

It should be noted that the second communication method may be used in combination with the first communication method in which the second device uses common DCI to feed back an acknowledgement message. For example, in an initial data transmission of the first device, the user-common DCI in the first communication method is used to feed back an acknowledgement message; and in a data retransmission of the first device, user-specific DCI is used to feed back an acknowledgement message. Alternatively, for a first device with no collision, the second device uses the user-common DCI in the first communication method to feed back an acknowledgement message; and for a first device with a collision, the second device uses user-specific DCI to feed back an acknowledgement message. The first device first needs to detect the common DCI. If the first device has not detected its own acknowledgement message in the common DCI, the first device needs to detect its own acknowledgement message in the user-specific DCI.

Optionally, corresponding to the first device side, the second device side first configures only a common resource of the first device and a common RNTI of the first device, and when the first device receives no acknowledgement message, the first device may initiate a grant-based connection, to request a particular RNTI. The second device sends an acknowledgement message to the first device based on the RNTI specific to the first device. Once the first device obtains the particular RNTI, the first device first needs to detect the common RNTI, and then detects the RNTI specific to the first device.

In this way, the first device may switch between different DCI types, to obtain as many advantages of both of the two types of DCI as possible, thereby achieving optimal system performance.

When the second device uses a particular RNTI to give an acknowledgement to uplink data of each first device, an acknowledgement message comprises one or more combinations of the following information:
(1) an acknowledgement message ACK/NACK;
(2) an ID of the first device or the RNTI specific to the first device;
(3) a modulation and coding scheme (Modulation and Coding Scheme, MCS) or an MCS adjustment value;
(4) TPC or a TPC adjustment value;
(5) a timing advance (Timing Advance, TA) value or a timing advance adjustment value;
(6) the indication information of the transmission mode, where different transmission modes are used for different services, different types of the first device, and different capabilities of the first device, so that a system provides diversified services based on different requirements, thereby better satisfying requirements of various services;
   specifically, the transmission mode comprises any two of the following transmission modes:
   the grant-based transmission mode and the without-grant transmission mode; or
   the contention-based without-grant transmission mode and the preconfiguration-based without-grant transmission mode; or
   the multi-resource transmission mode and the single-resource transmission mode;
   in addition, the indication information of the transmission mode may be indicated using explicit information, such as a field defined in DCI; optionally, the indication information of the transmission mode may be indicated using implicit information, for example, indicated using information such as a DMRS parameter used by the DCI and a mode-related RNTI;
   for different transmission modes, different types of resources or resource pools may be used in different without-grant transmission modes;
   optionally, the first device may use different RSs in without-grant uplink transmission in different transmission modes; alternatively, the first device selects a contention-free transmission mode or a preconfiguration-based transmission mode based on different service priorities; and
(7) the indication information of the transmission resource, where when a transmission resource used by the first device in a previous data transmission is not good enough, the first device may have an opportunity to know a status of the used transmission resource, and adjust the transmission resource in a timely manner, thereby improving system performance.

The indication information of the transmission resource may be indicated using the following information:
a resource allocation (Resource allocation, RA) location, where in this case, the second device uses signaling to indicate which time-frequency resources in a resource pool can be used; or
restrictive RA in a resource pool, where in this case, the second device uses signaling to indicate which time-frequency resources in the resource pool cannot be used; or
information indicating whether a current resource is available, where for example, one bit is used for indication, "1" suggests using a previously used transmission resource, and "0" suggests replacing the previously used transmission resource; or
indication information indicating whether frequency hopping is used, that is, indicating whether a frequency domain resource used in a next transmission is the same as a frequency domain resource used in a previous transmission; or indication information of a frequency hopping manner, where for example, one bit is used for indication, "1" indicates that a frequency hopping manner 1 is used, and "0" indicates that a frequency hopping manner 2 is used.

According to the foregoing communication method, a transmission parameter of the first device can be precisely indicated using the first control information, communication efficiency and performance are improved, and particularly, more efficient acknowledgement scheduling can be provided for a first device with a transmission collision.

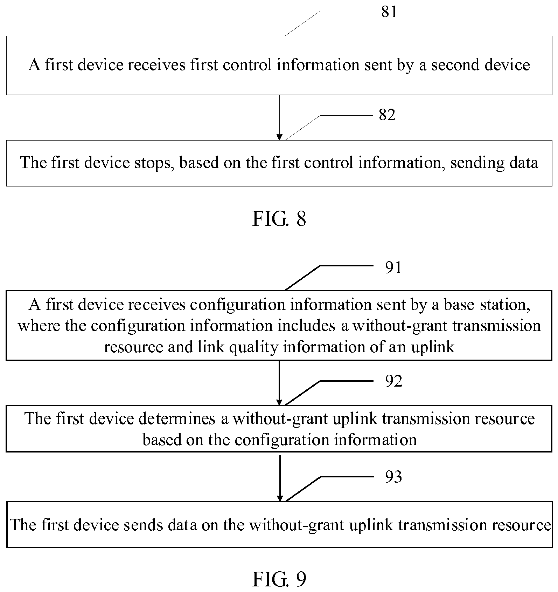

FIG. 8 is a flowchart of a third communication method according to this application. The method comprises the following steps.

Step 81: A first device receives first control information sent by a second device, where the first control information comprises indication information of stopping using a without-grant resource for transmission.

The indication information of stopping using a without-grant resource for transmission comprises a configuration parameter for stopping a current transmission, and the configuration parameter comprises any one of the following information: a start time and an end time of a timer for transmission suspension; and a time interval for transmission suspension.

Further, before performing step 81, the first device further needs to perform: sending second control information to the second device, where the second control information indicates a service priority or a service type of the first device.

Optionally, before the second device sends the first control information, the first device indicates a type and/or priority of data or a service of the first device in a control channel sent by the first device.

Step 82: The first device stops, based on the first control information, sending data.

Optionally, after the first device stops sending without-grant data, when the service type and/or the service priority of the first device changes, the first device may further send, to the second device, information indicating a service type and/or a service priority of the first device.

Optionally, the first device directly sends, on the control channel sent by the first device, request information for resuming without-grant transmission. In this case, a data part is empty.

Optionally, the second device uses signaling to instruct the first device to resume the without-grant data transmission, so that the second device performs transmission management when congestion occurs. When a network is congested, the second device may select some first devices to stop data transmission.

A beneficial effect is: The base station performs the transmission management when the congestion occurs, and the transmission management is associated with a service priority of UE, to ensure that UE with a high priority has more transmission opportunities.

Optionally, after the first device stops sending the without-grant data transmission, when the first device satisfies a preset condition, the first device sends, to the second device, request information for resuming the without-grant transmission. The preset condition includes: The timer for transmission suspension of the first device expires, or the time interval for transmission suspension elapses. Alternatively, when the service priority of the first device satisfies a preset condition, for example, the priority becomes higher after suspension or is greater than a particular threshold. The second device can perform the transmission management when the congestion occurs, and the transmission management is associated with the service priority of the first device, to ensure that a first device with a high priority has more transmission opportunities.

Optionally, the request information for resuming the without-grant transmission may be transmitted on a without-grant control channel.

When the service priority of the first device satisfies the preset condition, for example, the priority becomes higher after the suspension or is greater than the particular threshold, the first device starts transmission of the data before the timer for transmission suspension expires or before the time interval for transmission suspension elapses.

FIG. 9 is a flowchart of a fourth communication method according to this application. The method comprises the following steps.

Step 91: A first device receives configuration information sent by a base station, where the configuration information comprises a without-grant transmission resource and link quality information of an uplink.

The link quality information of the uplink comprises any one of the following information: signal quality of the uplink, such as a CQI, RSRP, an SNR, and an SINR; and congestion status indication information of each subresource on the uplink.

Optionally, the configuration information further comprises transmission parameter configuration information of the without-grant transmission resource.

Specifically, the base station sends, to the first device on a randomly selected shared (shared) resource pool, an RSRP value of a resource or a resource pool, or sends, to the first device, indication information indicating whether each subresource in the resource pool is congested, or sends, to the first device on a randomly selected shared resource pool, a transmission parameter list associated with uplink received congestion information and an priority value of a resource or a resource pool.

Step 92: The first device determines a without-grant uplink transmission resource based on the configuration information.

Specifically, the first device determines the without-grant uplink transmission resource based on the configuration information and a service priority of the first device.

Step 93: The first device sends data on the without-grant uplink transmission resource.

According to the foregoing method, congestion control is implemented based on measurement on the base station side and a measurement result indication, and efficiency of randomly contending for a resource pool can be improved.

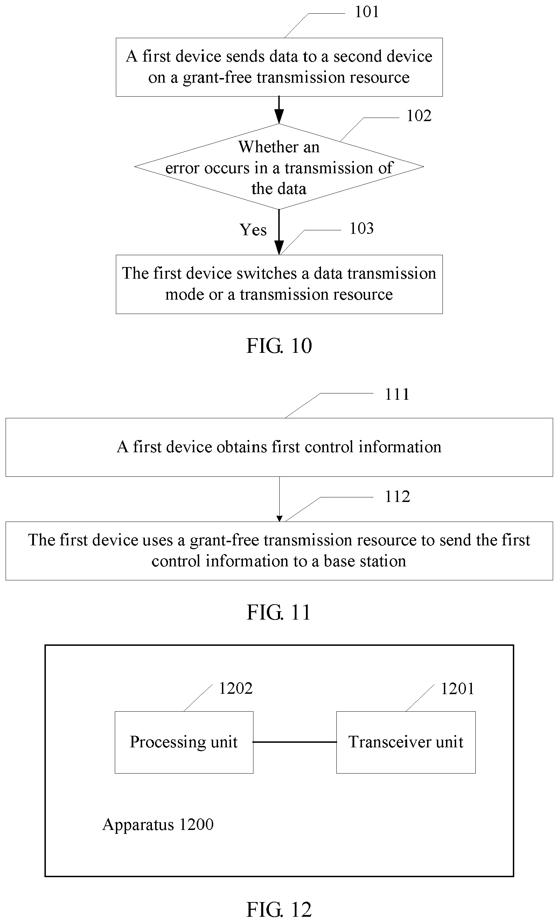

FIG. 10 is a flowchart of a fifth communication method according to this application. The method comprises the following steps.

Step 101: A first device sends data to a second device on a without-grant transmission resource.

Optionally, the first device sends, to the second device, type information of a transmission resource for the data, such as a contention-based without-grant transmission resource, a preconfiguration-based without-grant transmission resource, and a system-based reserved resource.

Step 102: Determine whether an error occurs in transmission of the data; and perform step 103 if the error occurs.

The error comprises:
the first device still receives no positive acknowledgement message after sending the data for N consecutive times, where N is a positive integer not greater than a predefined threshold.

Step 103: The first device switches a data transmission mode or a transmission resource.

The switching a data transmission mode comprises: switching from a contention-based without-grant transmission mode to a preconfiguration-based without-grant transmission mode.

The switching a transmission resource comprises: switching from the without-grant transmission resource to a reserved resource of the second device.

Optionally, the first device may determine, based on a service type or a service priority of the first device, whether to switch the transmission mode. For example, only a high-priority service can initiate switching of the transmission mode.

Specifically, the second device predefines some reserved resources used when an error occurs in a without-grant transmission. Optionally, the reserved resources may be in reserved resources defined by a system. In normal transmission, the first device transmits the data on a without-grant transmission resource. When the error occurs in the data transmission, the first device transmits the data on the reserved resources.

Optionally, the first device notifies, using an uplink control channel, the second device that the without-grant data transmission of the first device uses the without-grant reserved resources. It should be noted that a first device with a high service priority or a first device in a switching state can use the without-grant reserved resources.

When the error is rectified, the first device uses normal resources again, or the second device uses signaling in advance to require the first device to use the normal resources again.

Optionally, the first device receives indication information sent by the second device for switching from the reserved resource to the without-grant resource.

According to the foregoing communication method, when the error occurs in the without-grant transmission, the first device switches the data transmission mode or the transmission resource, to improve a data transmission processing capability of the first device in an error case, and decrease a data transmission delay in the error case.

FIG. 11 is a flowchart of a sixth communication method according to this application. The method comprises the following steps.

Step 111: A first device obtains first control information.

Optionally, the first control information is uplink control information (Uplink Control Information, UCI).

Step 112: The first device uses a without-grant transmission resource to send the first control information to a base station.

Further, before step 112, in other words, before the first device uses the without-grant transmission resource to send the first control information to the base station, the first device further needs to perform: receiving indication information sent by the base station for reporting the first control information.

The indication information may be carried in downlink control information, or may be carried in an acknowledgement message for without-grant uplink data.

Specifically, the first control information comprises at least one of the following: channel state information (Channel State Information, CSI); hybrid automatic repeat request (Hybrid Automatic Repeat reQuest, HARQ) acknowledgement information; and a scheduling request (Scheduling Request, SR).

The channel state information comprises at least one of the following:
signal quality information, such as an SNR, an SINR, a CQI, an RSSI, RSRP, and RSRQ; precoding indication information (Precoding Matrix Indication, PMI); beam indication (Beam Indication, BI) information; and rank indication (Rank Indication, RI) information.

Specifically, the using a without-grant transmission resource to send the first control information to a base station comprises the following two cases:
Case 1: A without-grant uplink data channel is used to send the first control information to the base station.

Specifically, the without-grant uplink data channel is used to send a first part of the first control information to the base station, and a grant-based uplink data channel is used to send a second part of the first control information to the base station.

Specifically, a without-grant uplink control channel, for example, a grant-based uplink control channel or a without-grant uplink control channel, may be used to send the first part of the first control information to the base station, for example, the HARQ acknowledgement message and/or the SR, and the without-grant uplink data channel is used to send the second part of the first control information to the base station, for example, other information in the first control information.

In this way, unwanted grant-based transmissions during feedback of the first control information can be reduced, and the without-grant transmission can be fully used, thereby improving transmission efficiency.

Case 2: A without-grant uplink control channel is used to send the first control information to the base station.

Specifically, the without-grant uplink control channel, for example, a grant-based uplink control channel or a without-grant uplink control channel, may be used to send a first part of the first control information to the base station, for example, the HARQ acknowledgement message and/or the SR, and a without-grant uplink data channel is used to send a second part of the first control information to the base station, for example, other information in the first control information.

Specifically, when the first device sends the CSI using the without-grant uplink control channel, all or a part of the CSI message is carried in the uplink control channel, and is transmitted using a reserved field of the uplink control channel or an invalid or unused field in a current transmission on the current uplink control channel. For example, during retransmission, if neither an MCS nor the transmission resource is changed, the first device needs to indicate only a quantity of retransmission times on the uplink control channel, and other fields such as fields indicating the MCS and a time-frequency resource used for the transmission may be used to carry the CSI. In this implementation, the first device needs to notify the base station that some fields in this case are used to carry the CSI. Because the control channel is used to transmit the CSI, resource utilization and transmission efficiency are improved, and a feedback delay of the CSI is decreased.

In this way, unwanted grant-based transmissions during feedback of the first control information can be reduced, and the without-grant transmission can be fully used, thereby improving transmission efficiency.

Case 3: A grant-based resource is used to send a first part of the first control information to the base station, for example, the HARQ acknowledgement message and/or the SR, and the without-grant resource is used to send a second part of the first control information to the base station, for example, other information in the first control information.

Case 4: A without-grant uplink carrier is used to send the first control information on a downlink carrier corresponding to the grant-based uplink carrier, or a grant-based uplink carrier is used to send the first control information on a downlink carrier corresponding to the without-grant uplink carrier.

Specifically, in a possible implementation, the without-grant resource (a carrier and various channels on the carrier) may be used to send CSI of the downlink carrier corresponding to the grant-based uplink carrier. Optionally, when there are a plurality of cellular link carriers, the first device receives a CSI request message sent by the base station, and the base station indicates, to the first device, an index of the without-grant uplink carrier used to send the CSI. Optionally, the first device sends, on a without-grant carrier, a CSI message on a grant-based carrier, and indicates an index of a carrier on which the measured CSI is located. Herein, a method for feeding back the CSI based on a multi-carrier connection is used to provide resource sharing between carriers, thereby improving transmission efficiency of a type of carrier, and reducing a CSI feedback delay.

Specifically, in another possible implementation, a grant-based resource (a carrier and various channels on the carrier) may be used to send CSI of the downlink carrier corresponding to the without-grant uplink carrier. When there are a plurality of cellular link carriers, on a without-grant carrier, the first device receives a CSI request message sent by the base station, and the base station indicates, to the first device, an index of the grant-based uplink carrier used to send the CSI. Optionally, the first device sends, on a grant-based carrier, a CSI message on the without-grant carrier, and indicates an index of a carrier on which the measured CSI is located. Herein, a method for feeding back the CSI based on a multi-carrier connection is used to provide resource sharing between carriers, thereby improving transmission efficiency of a type of carrier, and reducing a CSI feedback delay.

Optionally, when uplink CSI is sent using the without-grant resource, a transmission on a grant-based uplink control channel needs to be disabled. In this case, when using a without-grant uplink data channel to send the first control information to the base station, the first device receives indication information sent by the base station for disabling the transmission on the grant-based uplink control channel by the first device.

Optionally, when the first device sends the uplink CSI using the without-grant resource, no grant-based uplink transmission and/or no grant-based downlink transmission exists.

Optionally, the grant-based resource is used to transmit an ACK/NACK acknowledgement for downlink data transmission, and the without-grant resource is used to transmit downlink CSI feedback. The without-grant resource herein comprises a control channel, a data channel, and a carrier.

Optionally, the grant-based resource is used to transmit without-grant CSI, or the without-grant resource is used to transmit scheduling CSI.

According to the foregoing communication method, first control information on various different types of carriers can be fed back to the first device using only one scheduling manner, thereby reducing a quantity of feedback channels that exist in parallel, reducing system overheads, and reducing transmit power on the first device side.

It should be noted that the communication methods in the foregoing embodiments may be used separately, or may be used in combination. Messages sent by the second device (or the base station) may be used in combination, and messages sent by the first device (or the terminal device) may be used in combination.

Based on the foregoing method embodiment in FIG. 1, referring to FIG. 12, an embodiment of this application further provides a communications apparatus 1200. The apparatus 1200 has a function of implementing behavior of the first device or the terminal device in the method shown in FIG. 1. The function may be implemented using hardware, or may be implemented by hardware executing corresponding software. The hardware or the software comprises one or more modules corresponding to the foregoing function. A possible structure is shown in FIG. 12. The apparatus 1200 comprises a transceiver unit 1201 and a processing unit 1202.

The transceiver unit 1201 is configured to receive an acknowledgement message group sent by a second device, where the acknowledgement message group comprises an acknowledgement message of the second device for data sent by the transceiver unit 1201.

The processing unit 1202 is configured to: obtain a first parameter, where the first parameter is used to determine the acknowledgement message for the data sent by the transceiver unit 1201; and determine, from the acknowledgement message group based on the first parameter, the acknowledgement message for the data sent by the transceiver unit 1201.

Optionally, the data sent by the transceiver unit 1201 to the second device is sent by the transceiver unit 1201 using a without-grant transmission resource.

Optionally, the first parameter comprises indication information of a location, in the acknowledgement message group, of the acknowledgement message for the data sent by the transceiver unit 1201.

Optionally, the first parameter is used to determine the acknowledgement message for the data sent by the transceiver unit 1201, and the first parameter comprises:
indication information of a transmission resource for the data sent by the transceiver unit 1201.

Optionally, the transmission resource comprises at least one of the following resources: a time domain resource, a frequency domain resource, a code domain resource, and a space domain resource.

Optionally, the acknowledgement message group comprises an acknowledgement message for data received by the second device from at least one first device.

Optionally, the acknowledgement message further comprises index information of at least one transmission resource in a reference signal, control information, and data that are sent by the transceiver unit 1201.

Optionally, each acknowledgement message in the acknowledgement message group is an acknowledgement to the data sent by the at least one first device.

Optionally, the acknowledgement message in the acknowledgement message group is generated through an AND logical operation on the acknowledgement message for the at least one first device.

Optionally, the acknowledgement message generated through the AND logical operation corresponds to a same first parameter.

Optionally, the acknowledgement message of the second device for the data sent by the transceiver unit 1201 further comprises:
indication information indicating whether the first device or the transmission resource for the data sent by the transceiver unit 1201 has a collision, and/or indication information indicating whether the first device or the transmission resource for the data sent by the transceiver unit 1201 is idle.

Optionally, the acknowledgement message group is transmitted in common control information.

Optionally, when the processing unit 1202 has not detected the acknowledgement message in the common control information, the processing unit 1202 detects the acknowledgement message in control information specific to the first device.

Optionally, the acknowledgement message comprises at least one of indication information of a transmission mode and the indication information of the transmission resource.

Optionally, a frame structure of the data sent by the transceiver unit 1201 to the second device comprises a reference signal and data, or comprises a reference signal, control information, and data.

Optionally, the acknowledgement message of the second device for the data sent by the transceiver unit 1201 comprises positive or negative acknowledgement information for detection of the control information or the data sent by the transceiver unit 1201.

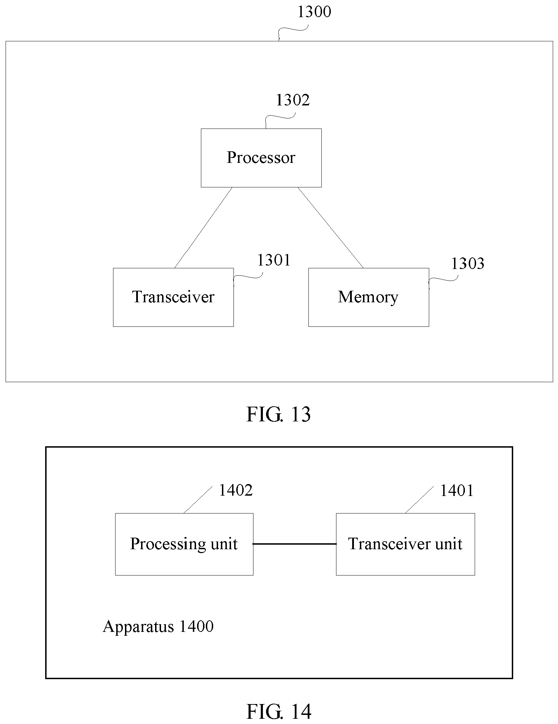

Based on a same concept, referring to FIG. 13, an embodiment of this application further provides a terminal device 1300. A structure of the device 1300 comprises a transceiver 1301, a processor 1302, and a memory 1303. The memory 1303 is configured to store a group of programs. The processor 1302 is configured to invoke the programs stored in the memory 1303, to perform a function of the first device in the method shown in FIG. 1.

Based on the foregoing method embodiment in FIG. 1, referring to FIG. 14, an embodiment of this application further provides a communications apparatus 1400. The apparatus 1400 has a function of implementing behavior of the second device or the base station in the method shown in FIG. 1. The function may be implemented using hardware, or may be implemented by hardware executing corresponding software. The hardware or the software comprises one or more modules corresponding to the foregoing function. A possible structure is shown in FIG. 14. The apparatus 1400 comprises a transceiver unit 1401 and a processing unit 1402.

The transceiver unit 1401 is configured to receive data sent by a first device.

The processing unit 1402 is configured to generate an acknowledgement message group for the data sent by the first device, where the acknowledgement message group comprises an acknowledgement message of the second device for the data sent by the at least one first device.

The transceiver unit 1401 is further configured to send the acknowledgement message group to the first device.

Optionally, the data received by the transceiver unit 1401 is sent by the first device using a without-grant transmission resource.

Optionally, before sending the acknowledgement message group to the first device, the transceiver unit 1401 is further configured to:
send a first parameter to the first device, where the first parameter is used to determine an acknowledgement message for the data sent by the first device.

Optionally, the first parameter comprises indication information of a location, in the acknowledgement message group, of the acknowledgement message for the data sent by the first device.

Optionally, the first parameter is used to determine the acknowledgement message for the data sent by the first device, and the first parameter comprises indication information of a transmission resource for the data sent by the first device.

Optionally, the transmission resource comprises at least one of the following resources: a time domain resource, a frequency domain resource, a code domain resource, and a space domain resource.

Optionally, the acknowledgement message group comprises the acknowledgement message for the data received by the transceiver unit 1401 from the at least one first device.

Optionally, the acknowledgement message further comprises index information of at least one transmission resource in a reference signal, control information, and data that are sent by the first device.

Optionally, each acknowledgement message in the acknowledgement message group is an acknowledgement to the data sent by the at least one first device.

Optionally, each acknowledgement message in the acknowledgement message group is generated through an AND logical operation on the acknowledgement message for the at least one first device.

Optionally, the acknowledgement message generated through the AND logical operation corresponds to a same first parameter.

Optionally, the acknowledgement message of the transceiver unit 1401 for the data sent by the first device further comprises:
indication information indicating whether the first device or the transmission resource for the data sent by the first device has a collision, and/or
indication information indicating whether the first device or the transmission resource for the data sent by the first device is idle.

Optionally, the acknowledgement message group is transmitted in common control information.

Optionally, the acknowledgement message comprises at least one of indication information of a transmission mode and the indication information of the transmission resource.

Optionally, a frame structure of the data that is sent by the first device and received by the transceiver unit 1401 comprises a reference signal and data, or comprises a reference signal, control information, and data.

Optionally, the acknowledgement message of the transceiver unit 1401 for the data sent by the first device comprises positive or negative acknowledgement information for detection of the control information or the data sent by the first device.

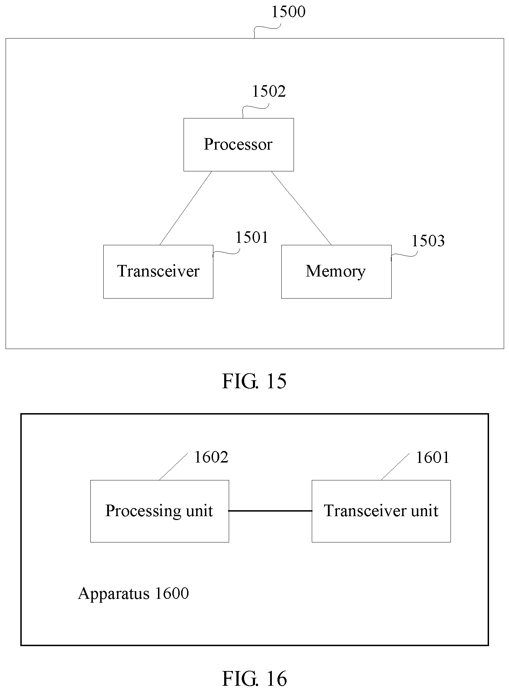

Based on a same concept, referring to FIG. 15, an embodiment of this application further provides a network device 1500. A structure of the device 1500 comprises a transceiver 1501, a processor 1502, and a memory 1503. The memory 1503 is configured to store a group of programs. The processor 1502 is configured to invoke the programs stored in the memory 1503, to perform a function of the second device in the method shown in FIG. 1.

Based on the foregoing method embodiment in FIG. 6, referring to FIG. 16, an embodiment of this application further provides a communications apparatus 1600. The apparatus 1600 has a function of implementing behavior of the first device in the method shown in FIG. 6. The function may be implemented using hardware, or may be implemented by hardware executing corresponding software. The hardware or the software comprises one or more modules corresponding to the foregoing function. A possible structure is shown in FIG. 16. The apparatus 1600 comprises a transceiver unit 1601 and a processing unit 1602.

The processing unit 1602 is configured to: obtain first control information, where the first control information comprises at least one of indication information of a transmission mode and indication information of a transmission resource; and determine a transmission resource for first data based on the first control information.

The transceiver unit 1601 is configured to send the first data on the determined transmission resource.

Optionally, the transmission mode comprises a grant-based transmission mode or a without-grant transmission mode.

Optionally, the transmission mode comprises a contention-based without-grant transmission mode or a preconfiguration-based without-grant transmission mode.

Optionally, the transmission mode comprises a single-resource transmission mode or a multi-resource transmission mode.

Optionally, when the determined transmission resource is a resource configured in the multi-resource transmission mode, the processing unit 1602 is further configured to obtain transmission parameter indication information of the multi-resource transmission mode.

Optionally, the transmission parameter indication information of the multi-resource transmission mode comprises at least one of the following: a quantity of subresources in each group of multi-resource transmissions; a frequency hopping parameter on each subresource in each group of multi-resource transmissions; a modulation scheme of a subresource in each group of multi-resource transmissions; a coding scheme of a subresource in each group of multi-resource transmissions; and a reference signal configuration parameter on each subresource in each multi-resource transmission.

Optionally, when the determined transmission resource is a resource configured in the multi-resource transmission mode, a transmission parameter for an initial transmission is different from a transmission parameter in a retransmission for the multi-resource transmission mode.

Optionally, before receiving the first control information, the transceiver unit 1601 is further configured to:
send second data and/or second control information, where the second control information indicates a transmission format of the second data.

Optionally, the second control information and the second data are transmitted on a same channel, or transmitted on different channels.

Optionally, the second control information comprises at least one of the following information:
a current quantity of transmission times;
indication information indicating whether the first device receives an acknowledgement, or a current retransmission type of the first device; and
indication information indicating whether transmit power of the first device can be reduced.

Optionally, the second control information further comprises request information for a transmission mode.

Optionally, when a service priority of the first device is greater than a particular threshold, the first device sends the request information for a transmission mode.

Optionally, the indication information of the transmission resource is further used to:
indicate whether the transmission resource used for sending the first data can still be used for sending the second data; or
indicate whether a transmission resource used for sending the second data is the same as the transmission resource for sending the first data.

Optionally, when obtaining the first control information, the processing unit 1602 is specifically configured to:
obtain the first control information based on different control information formats or control information transmission parameters.

Optionally, the control information transmission parameter comprises any one of the following information:
a CRC mask used in transmission of control information;
a generation parameter of a scrambling sequence (for example, an initial value of a generated sequence);
a generation parameter of a demodulation reference signal DMRS (such as a sequence identifier, a cyclic shift value of a sequence, and an OCC of the sequence); or
a control channel format (such as a control channel of level-1 scheduling or a control channel of level-2 scheduling).

Optionally, when determining the transmission resource for the first data based on the first control information, the processing unit 1602 is specifically configured to:
determine the transmission resource for the first data based on the indication information of the transmission mode, where different transmission modes correspond to different transmission resources or different transmission resource pools.

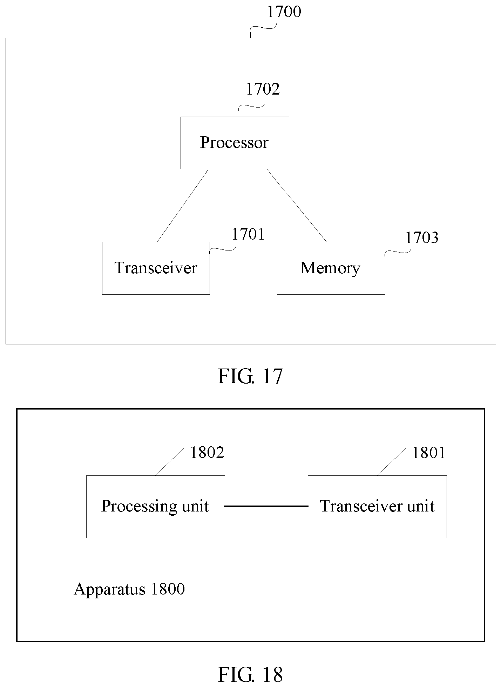

Based on a same concept, referring to FIG. 17, an embodiment of this application further provides a terminal device 1700. A structure of the device 1700 comprises a transceiver 1701, a processor 1702, and a memory 1703. The memory 1703 is configured to store a group of programs. The processor 1702 is configured to invoke the programs stored in the memory 1703, to perform a function of the first device in the method shown in FIG. 6.

Based on the foregoing method embodiment in FIG. 8, referring to FIG. 18, an embodiment of this application further provides a communications apparatus 1800. The apparatus 1800 has a function of implementing behavior of the first device in the method shown in FIG. 8. The function may be implemented using hardware, or may be implemented by hardware executing corresponding software. The hardware or the software comprises one or more modules corresponding to the foregoing function. A possible structure is shown in FIG. 18. The apparatus 1800 comprises a transceiver unit 1801 and a processing unit 1802.

The transceiver unit 1801 is configured to receive first control information sent by a second device, where the first control information comprises indication information of stopping using a without-grant resource for transmission.

The processing unit 1802 is configured to stop, based on the first control information, sending data.

Optionally, the indication information of stopping using a without-grant resource for transmission comprises a configuration parameter for stopping a current transmission, and the configuration parameter comprises any one of the following information:
a start time and an end time of a timer for transmission suspension; and
a time interval for transmission suspension.

Optionally, the transceiver unit 1801 starts sending the data when the following condition is satisfied:
the timer for transmission suspension expires, or
the time interval for transmission suspension elapses.

Optionally, before receiving the first control information, the transceiver unit is further configured to send second control information to the second device, where the second control information indicates a service priority or a service type of the first device.

Optionally, the transceiver unit 1801 is further configured to:
when the service priority of the first device satisfies a preset condition (for example, the priority becomes higher after suspension or is greater than a particular threshold), start transmission of the data before the timer for transmission suspension expires or before the time interval for transmission suspension elapses.

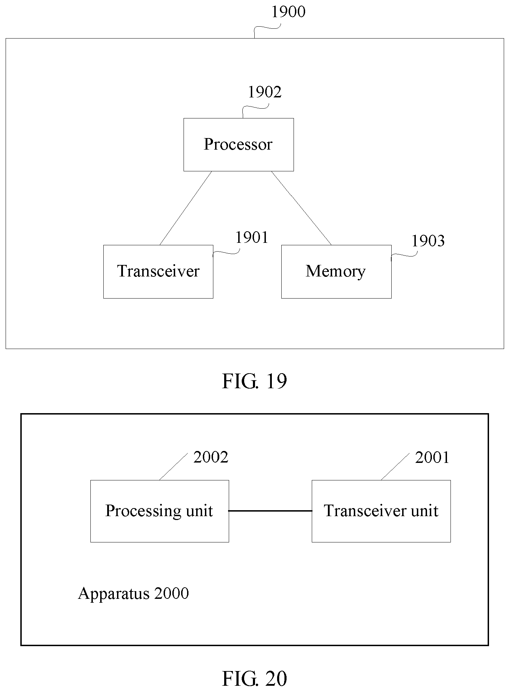

Based on a same concept, referring to FIG. 19, an embodiment of this application further provides a terminal device 1900. A structure of the device 1900 comprises a transceiver 1901, a processor 1902, and a memory 1903. The memory 1903 is configured to store a group of programs. The processor 1902 is configured to invoke the programs stored in the memory 1903, to perform a function of the first device in the method shown in FIG. 8.

Based on the foregoing method embodiment in FIG. 9, referring to FIG. 20, an embodiment of this application further provides a communications apparatus 2000. The apparatus 2000 has a function of implementing behavior of the first device in the method shown in FIG. 9. The function may be implemented using hardware, or may be implemented by hardware executing corresponding software. The hardware or the software comprises one or more modules corresponding to the foregoing function. A possible structure is shown in FIG. 20. The apparatus 2000 comprises a transceiver unit 2001 and a processing unit 2002.

The transceiver unit 2001 is configured to receive configuration information sent by a base station, where the configuration information comprises a without-grant transmission resource and link quality information of an uplink.

The processing unit 2002 is configured to determine a without-grant uplink transmission resource based on the configuration information.

The transceiver unit 2001 is further configured to send data on the without-grant uplink transmission resource.

Optionally, the configuration information further comprises transmission parameter configuration information of the without-grant transmission resource.

Optionally, the processing unit 2002 is specifically configured to determine the without-grant uplink transmission resource based on the configuration information and a service priority of the first device.

Optionally, the link quality information of the uplink comprises any one of the following information:
signal quality of the uplink (such as a CQI, RSRP, an SNR, and an SINR); and
congestion status indication information of each subresource on the uplink.

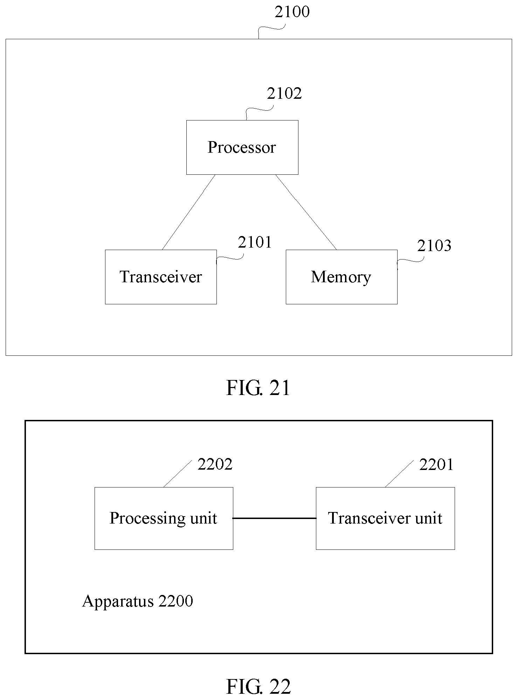

Based on a same concept, referring to FIG. 21, an embodiment of this application further provides a terminal device 2100. A structure of the device 2100 comprises a transceiver 2101, a processor 2102, and a memory 2103. The memory 2103 is configured to store a group of programs. The processor 2102 is configured to invoke the programs stored in the memory 2103, to perform a function of the first device in the method shown in FIG. 9.

Based on the foregoing method embodiment in FIG. 10, referring to FIG. 22, an embodiment of this application further provides a communications apparatus 2200. The apparatus 2200 has a function of implementing behavior of the first device in the method shown in FIG. 10. The function may be implemented using hardware, or may be implemented by hardware executing corresponding software. The hardware or the software comprises one or more modules corresponding to the foregoing function. A possible structure is shown in FIG. 22. The apparatus 2200 comprises a transceiver unit 2201 and a processing unit 2202.

The transceiver unit 2201 is configured to send data to a second device on a without-grant transmission resource.

The processing unit 2202 is configured to: determine whether an error occurs in transmission of the data; and switch a data transmission mode or a transmission resource if the error occurs.

Optionally, the error comprises:
the first device still receives no positive acknowledgement message after sending the data for N consecutive times, where N is a positive integer not greater than a predefined threshold.

Optionally, the switching a data transmission mode comprises:
switching from a contention-based without-grant transmission mode to a preconfiguration-based without-grant transmission mode.

Optionally, the switching a transmission resource comprises:
switching from the without-grant transmission resource to a reserved resource.

Optionally, the transceiver unit 2201 is further configured to:
send, to the second device, type information of a transmission resource for the data (a contention-based without-grant transmission resource, a preconfiguration-based without-grant transmission resource, and a system-based reserved resource).

Optionally, the transceiver unit 2201 is further configured to:
receive indication information sent by the second device for switching from the reserved resource to the without-grant resource.

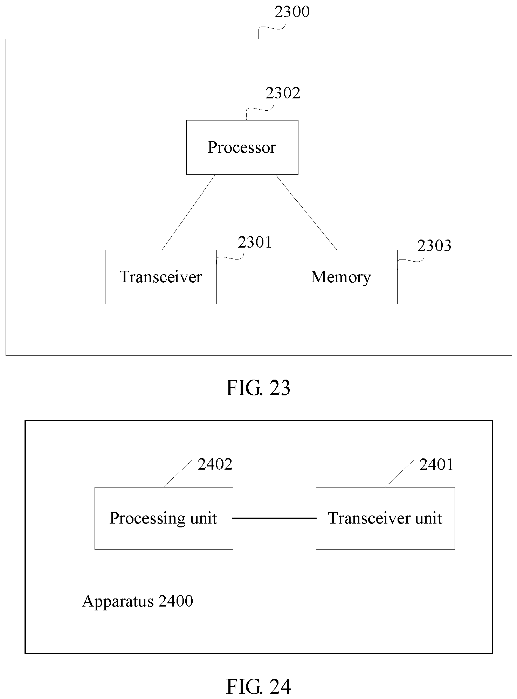

Based on a same concept, referring to FIG. 23, an embodiment of this application further provides a terminal device 2300. A structure of the device 2300 comprises a transceiver 2301, a processor 2302, and a memory 2303. The memory 2303 is configured to store a group of programs. The processor 2302 is configured to invoke the programs stored in the memory 2303, to perform a function of the first device in the method shown in FIG. 10.

Based on the foregoing method embodiment in FIG. 11, referring to FIG. 24, an embodiment of this application further provides a communications apparatus 2400. The apparatus 2400 has a function of implementing behavior of the first device in the method shown in FIG. 11. The function may be implemented using hardware, or may be implemented by hardware executing corresponding software. The hardware or the software comprises one or more modules corresponding to the foregoing function. A possible structure is shown in FIG. 24. The apparatus 2400 comprises a transceiver unit 2401 and a processing unit 2402.

The processing unit 2402 is configured to obtain first control information (such as uplink control information UCI).

The transceiver unit 2401 is configured to use a without-grant transmission resource to send the first control information to a base station (it should be noted that various possible entities of the base station need to be specified in the specification, including a transmit node of a relay).

Optionally, the first control information comprises at least one of the following:
channel state information (CSI);
HARQ acknowledgement information; and
a scheduling request (Scheduling Request, SR).

Optionally, the channel state information comprises at least one of the following:
signal quality information (an SNR, an SINR, a CQI, an RSSI, RSRP, and RSRQ);
precoding indication information (PMI);
beam indication (BI) information; and
rank indication (RI) information.

Optionally, when using the without-grant transmission resource to send the first control information to the base station, the transceiver unit 2401 is specifically configured to:
use a without-grant uplink data channel to send the first control information to the base station.

Optionally, when using the without-grant uplink data channel to send the first control information to the base station, the transceiver unit 2401 is further configured to receive indication information sent by the base station for disabling a transmission on a grant-based uplink control channel by the first device.

Optionally, when using the without-grant uplink data channel to send the first control information to the base station, the transceiver unit 2401 is specifically configured to:
use the without-grant uplink data channel to send a first part of the first control information to the base station, and use a grant-based uplink data channel to send a second part of the first control information to the base station.

Optionally, when using the without-grant resource to send the first control information to the base station, the transceiver unit 2401 is specifically configured to:
use a without-grant uplink control channel to send the first control information to the base station.

Optionally, when using the without-grant resource to send the first control information to the base station, the transceiver unit 2401 is specifically configured to:
use the without-grant uplink control channel to send a first part of the first control information to the base station, and use a without-grant uplink data channel to send a second part of the first control information to the base station.

Optionally, when using the without-grant transmission resource to send the first control information to the base station, the transceiver unit 2401 is specifically configured to:
use a grant-based resource to send a first part of the first control information to the base station, and use the without-grant resource to send a second part of the first control information to the base station.

Optionally, before using the without-grant transmission resource to send the first control information to the base station, the transceiver unit 2401 is further configured to:
receive indication information sent by the base station for reporting the first control information.

Optionally, when using the without-grant transmission resource to send the first control information to the base station, the transceiver unit 2401 is specifically configured to:
use a without-grant uplink carrier to send the first control information on a downlink carrier corresponding to the grant-based uplink carrier; or
use a grant-based uplink carrier to send the first control information on a downlink carrier corresponding to the without-grant uplink carrier.

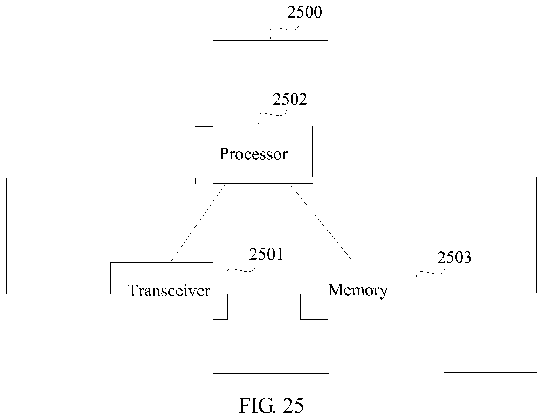

Based on a same concept, referring to FIG. 25, an embodiment of this application further provides a terminal device 2500. A structure of the device 2500 comprises a transceiver 2501, a processor 2502, and a memory 2503. The memory 2503 is configured to store a group of programs. The processor 2502 is configured to invoke the programs stored in the memory 2503, to perform a function of the first device in the method shown in FIG. 11.

An embodiment of this application further provides a computer readable storage medium, configured to store a computer software instruction used to perform a function that needs to be performed by the processor. The computer software instruction comprises a program used to perform the function that needs to be performed by the processor.

It should be noted that a connection manner between components shown in FIG. 13, FIG. 15, FIG. 17, FIG. 19, FIG. 21, FIG. 23, or FIG. 25 is merely a possible example. Alternatively, both the transceiver and the memory may be connected to the processor, and the transceiver is not connected to the memory. Alternatively, another possible connection manner may be used. The processor may be a central processing unit (English: central processing unit, CPU for short), a network processor (English: network processor, NP for short), or a combination of the CPU and the NP.

The processor may further include a hardware chip. The hardware chip may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof.

The memory may include a transitory memory (English: volatile memory) such as a random-access memory (English: random-access memory, RAM for short). Alternatively, the memory may include a non-transitory memory (English: non-volatile memory) such as a flash memory (English: flash memory), a hard disk drive (English: hard disk drive, HDD for short), or a solid state drive (English: solid-state drive, SSD for short). Alternatively, the memory may include a combination of the foregoing types of memories.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that comprises an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, comprising:
receiving, by a first device, an acknowledgement message group sent by a second device, wherein the acknowledgement message group comprises an acknowledgement message of the second device for data sent by the first device;
obtaining a first parameter, wherein the first parameter is used to determine the acknowledgement message for the data sent by the first device; and
determining, from the acknowledgement message group based on the first parameter, the acknowledgement message for the data sent by the first device.

2. The method according to claim 1, wherein the data sent by the first device to the second device is sent by the first device using a without-grant transmission resource.

3. The method according to claim 1 or 2, wherein the first parameter comprises indication information of a location, in the acknowledgement message group, of the acknowledgement message for the data sent by the first device.

4. The method according to claim 1 or 2, wherein the first parameter is used to determine the acknowledgement message for the data sent by the first device, and the first parameter comprises:
indication information of a transmission resource for the data sent by the first device.

5. The method according to any one of claims 1 to 4, wherein each acknowledgement message in the acknowledgement message group is an acknowledgement to data sent by at least one first device.

6. The method according to any one of claims 1 to 5, wherein the acknowledgement message of the second device for the data sent by the first device further comprises:
indication information indicating whether the first device or the transmission resource for the data sent by the first device has a collision, and/or
indication information indicating whether the first device or the transmission resource for the data sent by the first device is idle.

7. The method according to any one of claims 1 to 6, wherein the acknowledgement message group is transmitted in common control information.

8. The method according to any one of claims 1 to 7, wherein the acknowledgement message comprises at least one of indication information of a transmission mode and the indication information of the transmission resource.

9. A communication method, comprising:
receiving, by a second device, data sent by a first device;
generating, by the second device, an acknowledgement message group for the data sent by the first device, wherein the acknowledgement message group comprises an acknowledgement message of the second device for the data sent by the at least one first device; and
sending, by the second device, the acknowledgement message group to the first device.

10. The method according to claim 9, wherein the data received by the second device is sent by the first device using a without-grant transmission resource.

11. The method according to claim 9 or 10, wherein before the sending, by the second device, the acknowledgement message group to the first device, the method further comprises:
sending, by the second device, a first parameter to the first device, wherein the first parameter is used to determine an acknowledgement message for the data sent by the first device.

12. The method according to any one of claims 9 to 11, wherein the first parameter comprises indication information of a location, in the acknowledgement message group, of the acknowledgement message for the data sent by the first device.

13. The method according to any one of claims 9 to 12, wherein the first parameter is used to determine the acknowledgement message for the data sent by the first device, and the first parameter comprises indication information of a transmission resource for the data sent by the first device.

14. The method according to any one of claims 9 to 13, wherein each acknowledgement message in the acknowledgement message group is an acknowledgement to the data sent by the at least one first device.

15. The method according to any one of claims 9 to 14, wherein the acknowledgement message of the second device for the data sent by the first device further comprises:
indication information indicating whether the first device or the transmission resource for the data sent by the first device has a collision, and/or
indication information indicating whether the first device or the transmission resource for the data sent by the first device is idle.

16. The method according to any one of claims 9 to 15, wherein the acknowledgement message group is transmitted in common control information.

17. A first device, comprising:
a transceiver unit, configured to receive an acknowledgement message group sent by a second device, wherein the acknowledgement message group comprises an acknowledgement message of the second device for data sent by the transceiver unit; and
a processing unit, configured to: obtain a first parameter, wherein the first parameter is used to determine the acknowledgement message for the data sent by the transceiver unit; and determine, from the acknowledgement message group based on the first parameter, the acknowledgement message for the data sent by the transceiver unit.

18. The first device according to claim 17, wherein the data sent by the transceiver unit to the second device is sent by the transceiver unit using a without-grant transmission resource.

19. The first device according to claim 17 or 18, wherein the first parameter comprises indication information of a location, in the acknowledgement message group, of the acknowledgement message for the data sent by the transceiver unit.

20. The first device according to claim 17 or 18, wherein the first parameter is used to determine the acknowledgement message for the data sent by the transceiver unit, and the first parameter comprises:
indication information of a transmission resource for the data sent by the transceiver unit.

21. The first device according to any one of claims 17 to 20, wherein each acknowledgement message in the acknowledgement message group is an acknowledgement to data sent by at least one first device.

22. The first device according to any one of claims 17 to 21, wherein the acknowledgement message of the second device for the data sent by the transceiver unit further comprises:
indication information indicating whether the first device or the transmission resource for the data sent by the transceiver unit has a collision, and/or
indication information indicating whether the first device or the transmission resource for the data sent by the transceiver unit is idle.

23. The first device according to any one of claims 17 to 22, wherein the acknowledgement message group is transmitted in common control information.

24. The first device according to any one of claims 17 to 23, wherein the acknowledgement message comprises at least one of indication information of a transmission mode and the indication information of the transmission resource.

25. A second device, comprising:
a transceiver unit, configured to receive data sent by a first device; and
a processing unit, configured to generate an acknowledgement message group for the data sent by the first device, wherein the acknowledgement message group comprises an acknowledgement message of the second device for the data sent by the at least one first device, wherein
the transceiver unit is further configured to send the acknowledgement message group to the first device.

26. The second device according to claim 25, wherein the data received by the transceiver unit is sent by the first device using a without-grant transmission resource.

27. The second device according to claim 25 or 26, wherein before sending the acknowledgement message group to the first device, the transceiver unit is further configured to:
send a first parameter to the first device, wherein the first parameter is used to determine an acknowledgement message for the data sent by the first device.

28. The second device according to any one of claims 25 to 27, wherein the first parameter comprises indication information of a location, in the acknowledgement message group, of the acknowledgement message for the data sent by the first device.

29. The second device according to any one of claims 25 to 28, wherein the first parameter is used to determine the acknowledgement message for the data sent by the first device, and the first parameter comprises indication information of a transmission resource for the data sent by the first device.

30. The second device according to any one of claims 25 to 29, wherein each acknowledgement message in the acknowledgement message group is an acknowledgement to the data sent by the at least one first device.

31. The second device according to any one of claims 25 to 30, wherein the acknowledgement message of the transceiver unit for the data sent by the first device further comprises:
indication information indicating whether the first device or the transmission resource for the data sent by the first device has a collision, and/or
indication information indicating whether the first device or the transmission resource for the data sent by the first device is idle.

32. The second device according to any one of claims 25 to 31, wherein the acknowledgement message group is transmitted in common control information.
